(19) Europäisches Patentamt
European Patent Office
Office européen des brevets

(11) **EP 1 909 275 B1**

(12) **EUROPEAN PATENT SPECIFICATION**

(45) Date of publication and mention
of the grant of the patent:
**02.06.2010 Bulletin 2010/22**

(21) Application number: **06781021.8**

(22) Date of filing: **12.07.2006**

(51) Int Cl.:
***G11B 7/26*** (2006.01)

(86) International application number:
**PCT/JP2006/313901**

(87) International publication number:
**WO 2007/007807 (18.01.2007 Gazette 2007/03)**

(54) **PROCESS FOR PRODUCING OPTICAL RECORDING MEDIUM AND APPARATUS THEREFOR**

PROZESS ZUR HERSTELLUNG EINES OPTISCHEN AUFZEICHNUNGSMEDIUMS UND
VORRICHTUNG DAFÜR

PROCÉDÉ ET APPAREIL DE FABRICATION D'UN SUPPORT D'ENREGISTREMENT OPTIQUE

(84) Designated Contracting States:
**DE**

(30) Priority: **13.07.2005 JP 2005204430**

(43) Date of publication of application:
**09.04.2008 Bulletin 2008/15**

(73) Proprietor: **Mitsubishi Kagaku Media Co., Ltd.**
**Minato-ku**
**Tokyo (JP)**

(72) Inventors:
• **NOJIRI, Seiki,**
**c/o Dia Media Co., Ltd.**
**Kurashiki-shi, Okayama 7128052 (JP)**

• **The other inventors have agreed to waive their entitlement to designation.**

(74) Representative: **HOFFMANN EITLE**
**Patent- und Rechtsanwälte**
**Arabellastrasse 4**
**81925 München (DE)**

(56) References cited:
**JP-A- 2004 039 050     JP-A- 2004 095 108**
**JP-A- 2005 071 571     JP-A- 2005 085 427**

## Description

Technical Field

The present invention relates to a method and an apparatus for making an optical recording medium. In particular, the present invention relates to a method and an apparatus for making an optical recording medium for a Blu-ray Disc provided with a resin layer (particularly, a transparent resin layer) thereon.

Background Art

In recent years, Blu-ray Discs (hereinafter, referred to as BDs) have drawn attention as next-generation optical recording media. In such optical recording media, the designed track pitch is narrower than that of conventional optical recording media such as CDs and DVDs in order to increase the recording density. Thus, the beam spot diameter of laser light incident on the optical recording media should also be smaller than that in the conventional media.

Meanwhile, the beam spot diameter of the laser light is in proportion to the ratio of the wavelength $\lambda$ of the laser light to the numerical aperture NA of the lens. If the ratio is decreased, a smaller beam spot diameter can be achieved. In actual cases, laser light having a wavelength $\lambda$ in a blue region (for example, $\lambda \approx 405$ nm) and a lens having a large numerical aperture NA (for example, NA $\approx 0.85$) are used.

Use of a lens having a high numerical aperture NA inevitably decreases the focal depth of the laser light. As a result, irradiation on a recording layer with a laser beam through a conventional light-transmitting substrate having high mechanical strength (typically a polycarbonate substrate) used for CDs and DVDs, is not applicable.

In BDs, therefore, in order to focus the laser light on a point in the vicinity of a recording layer, a transparent resin layer having a thickness of about 0.1 mm is formed on the recording layer provided on a substrate having high mechanical strength. The recording layer is irradiated with laser light through the transparent resin layer for writing and/or reading information.

Such an increase in numerical aperture NA of the lens causes a decreased tolerance of the uniformity in the thickness of the transparent resin layer. Accordingly, the transparent resin layer must be a homogeneous and uniform layer that does not contain micropores and has a uniform thickness.

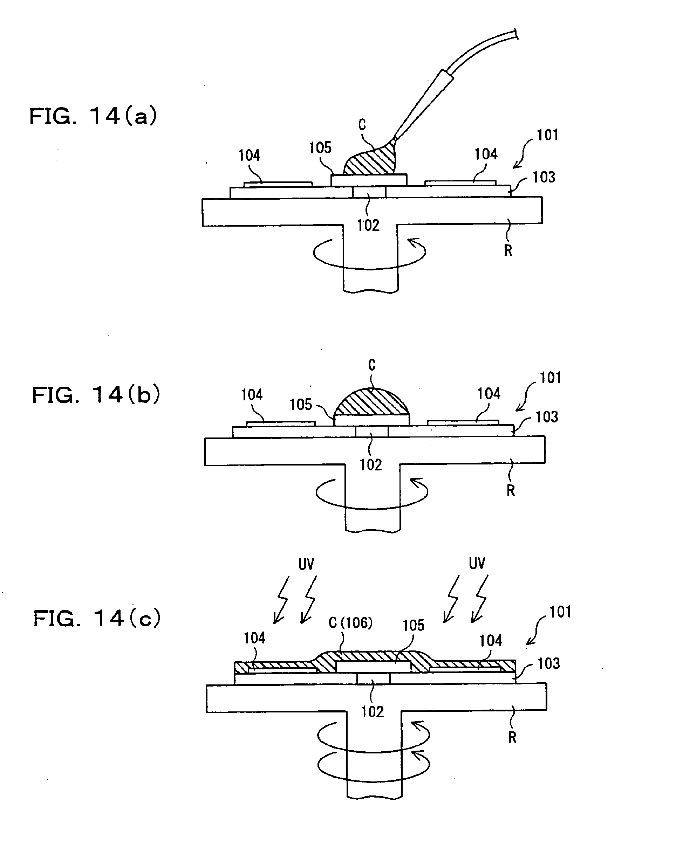

In a conventional process for making the transparent resin layer, a liquid curable resin is supplied in the vicinity of a cap member placed in the center of a substrate and is spread by spin coating. This process will now be described in detail with reference to Figs. 14 (a) to (c).

In this process, as shown in Fig. 14 (a), a recording medium 101 (a substrate 103 having a central hole 102 and a read/write functional layer 104) is placed on a turn table (revolver) R. Next, the central hole 102 is covered by a cap member 105. A liquid curable resin material $c$ is then supplied in the vicinity of the center of a cap member 105 through a nozzle N. With reference to Fig. 14 (b), a substrate 103 is rotated on the turn table R to spread curable resin material $c$ by centrifugal force. After the curable resin material $c$ is spread to a predetermined thickness, as shown in Fig. 14 (c), the curable resin material $c$ is photo-cured to form a transparent resin layer 106 on the read/write functional layer 104.

Patent Documents 1 and 2 describe that covering the central hole of a substrate with a cap member, supplying a curable resin in the vicinity of the center of the cap member, and spreading the curable resin from the center of the substrate by spinning enable formation of a protective layer or a transparent layer, each having a uniform thickness over the entire substrate.

JP-A-2005 071571 discloses a method for manufacturing an optical information recording medium with a light-transmitting layer including a plurality of resin layers formed on a main surface of a substrate. The method comprises a plurality of spin coating steps for forming the resin layers on the substrate during the course of which a center hole of the substrate is covered by a cap. For the different spin coating steps, different caps with varying outer diameters are used so as to produce a layered structure where the resin layer inner diameter increases from the bottom layer, close to the substrate, to the top layer.

[Patent Document 1] Japanese Patent Application Laid-open No. HEI 10-289489.
[Patent Document 2] Japanese Patent Application Laid-open No. 10-249264.

Disclosure of Invention

Problems to be solved by the Invention

The inventors, however, have found that the conventional technology has the following problems.
The cap member 105 is separate from the substrate 103. Thus, a microlevel step is generated between the periphery of the cap member 105 and the substrate 103 after the cap member 105 is placed on the center of the substrate 103. In order to form a transparent resin layer 106 having a thickness of about 0.1 mm, a high-viscosity liquid curable resin material *c* must be used. Spin spreading of such a high-viscosity liquid curable resin material *c* may require a high speed of rotation of at least several thousands per minute in some cases. Thus, the liquid curable resin material *c* cannot plug the step between the cap member 105 and the substrate 103 if the liquid curable resin material *c* flies over the step between the periphery of the cap member 105 and the substrate 103.

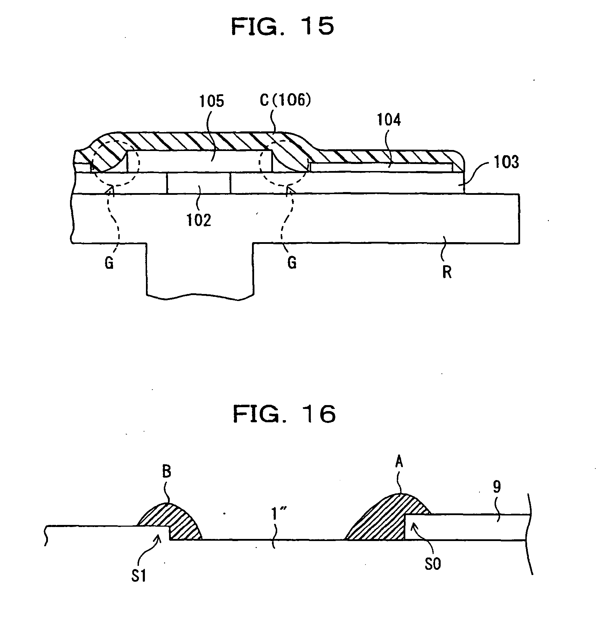

Fig. 15 is a schematic cross-sectional view that illustrates such a phenomenon. This drawing is an enlarged schematic cross-sectional view that illustrates a state of the curable resin material *c* flowing over the bump of the cap member 105. In Fig. 15, the same elements as those in Fig. 14 are denoted by the same reference numerals. As shown in Fig. 15, a gap (G in the drawing) can be readily formed among the periphery of the cap member 105, the substrate 103, and the curable resin material *c*. Since air in the gap is caught up in the spreading curable resin material *c* during the spin spreading operation of the curable resin material *c*, microbubbles are trapped in the transparent resin layer 106.

Furthermore, a narrow interspace may be formed at the interface between the cap member 105 and the substrate 103 even if the cap member 105 is pressed down towards the center of the substrate 103. If spin coating is carried out under such a condition, the liquid curable resin material *c* catches up a slight amount of air remaining in the interspace while being spread out. Although formation of the transparent resin layer 106 under such a condition contributes to an improvement in uniformity of thickness, bubbles cannot be sufficiently removed from the transparent resin layer 106.

Since the cap member 105 is not bonded to the substrate 103, the cap member 105 may move slightly on the center of the substrate 103 during spin spreading of the curable resin material *c*. Probably, this movement is caused by vibration of the revolver R. This slight movement of the cap member 105 facilitates air trapping by the transparent resin layer 106.

Bubbles trapped in the transparent resin layer 106 tend to cause the following phenomena: Since these bubbles may scatter laser light, information recorded on a recording layer under the transparent resin layer 106 cannot be read out correctly in a certain case. The bubbles may vary the focal point of the laser light in the vicinity of the recording layer or may reduce the focal length of the laser light. As a result, an optical pickup will readily collide with the transparent resin layer 106. This precludes satisfactory writing of information to the read/write functional layer 104 or reading of information from the layer 104, or physically damages the recording surface and/or an optical component.

The present invention has been accomplished to solve these problems. An object of the present invention is to provide a method and apparatus for making an optical recording medium that can suppress air trapping and generation of bubbles in the resin layer and can produce an optical recording medium provided with a resin layer having a uniform thickness. Another object of the present invention is to provide a method and apparatus for making an optical recording medium that uses a transparent resin layer as the resin layer.

Means for solving the Problem

As a result of extensive study under the above-described circumstances, the inventors have discovered the following fact and accomplished the present invention. A cap member is placed so as to close the central hole of a substrate while a resin film is formed to cover a step between the cap member and the recording medium, and a curable resin material is supplied onto the cap member, is spin-spread, and is cured to form a resin layer on the recording medium. In the resin layer of the resulting optical recording medium, air trapping and bubble generation are suppressed and the thickness of the resin layer is uniform.

An aspect of the present invention is a method for making an optical recording medium comprising: placing a disk cap member on a recording medium comprising a circular substrate having a central hole so as to close the central hole wherein the diameter of the disk cap member is equal to or greater than that of the central hole and supplying a liquid resin material a so as to cover a step between the disk cap member and the recording medium; curring the resin material a to form a resin film A; supplying a curable resin material *c* for forming a resin layer on the cap member; and rotating the recording medium to spin-spread the curable resin material *c* and curing the curable resin material *c* during or after the spin spreading to form the resin layer on the recording medium.
(claim 1).

Preferably, the resin layer is a transparent resin layer (claim 2).

Preferably the diameter of the cap member is greater than the diameter of the central hole (claim 3).

Preferably, the resin material *a* is a photocurable resin material (claim 4).

Preferably, the resin material *a* has a viscosity in the range of 30 mPa·s to 5000 mPa·s (claim 5).

Preferably, the resin material *a* is circularly applied to a position on the recording medium, the position corresponding to the diameter of the cap member; the cap member is placed so as to be pressed on the resin material *a*; and the resin material *a* is cured to form the resin film A (claim 6).

Alternatively, it is preferred that the cap member be bonded to the recording medium, the resin material a be circularly applied to a position corresponding to the periphery of the cap member, and the resin material a be cured to form the resin film A (claim 7).

Preferably, the cap member is bonded to the recording medium with a curable or tacky adhesive (claim 8).

Preferably, the curable adhesive is a photocurable resin having a viscosity in the range of 30 mPa·s to 5000 mPa·s (claim 9).

Alternatively, it is preferred that the resin material *a* be circularly applied at a position on the recording medium, the position corresponding to an outer side of the periphery of the cap member, and the resin material a be circularly applied at a position corresponding to the diameter of the cap member to form the resin film A (claim 10).

Preferably, the curable resin material *c* is a photocurable resin material (claim 11).

Preferably, the curable resin material *c* has a viscosity in the range of 30 mPa·s to 5000 mPa·s (claim 12).

Preferably, the periphery of the cap member has a thickness that is equal to or less than five times the thickness of the resin layer (claim 13).

Preferably, the resin film A is formed so as to extend from the periphery of the cap member to the recording medium along the periphery of the cap member, and the following relationships hold:

$$y \le 5 \times x$$

$$z \le 20 \times x$$

where x is the thickness of the periphery of the cap member, y is the distance from the periphery of the cap member to the peak of the resin film A, and z is the width of the resin film A extending from the periphery of the cap member on the recording medium (claim 14).

Preferably, the angle defined by the outer circumference of the resin film A and the recording medium is 30° or less (claim 15).

Preferably, if the cap member has a burr at the periphery thereof, the resin film A is formed so as to cover the burr (claim 16).

Preferably, the cap member comprises a plastic (claim 17).

Preferably, the plastic is at least one material selected from the group consisting of polypropylene, polyethylene, polystyrene, nylons, polyethylene terephthalate (PET), polyvinyl chloride, polyvinyl alcohol, polyvinylidene chloride, ABS resins, polymethyl methacrylate (PMMA), epoxy resins, and cellulose triacetate resins (claim 18).

Preferably, the cap member comprises polyvinyl chloride having a 100% modulus in the range of 3 MPa to 30 MPa (claim 19).

Preferably, every bump/step of 0.05 mm or more hight that is present on the recording medium are covered by the cap member and the resin film A (claim 20).

Preferably, a bump that is present on the recording medium is covered with a resin film B that is physically separated from the resin film A covering the step formed by the cap member and the recording medium (claim 21).

Preferably, the cap member is not detached from the recording medium when the recording medium is moved upward by sucking the cap member in a state in which the resin film A is formed (claim 22).

Preferably, after the resin layer is formed, the resin layer on the recording medium is incised at a position outer than the periphery of the cap member to remove the cap member and the resin film A (claim 23).

Preferably, the resin layer is incised by light irradiation from the resin layer wherein the light irradiation condition is controlled such that the depth of the incision is between 0.5 times and 1.5 times the thickness of the resin layer (claim 24).

Preferably, the curable resin material *c* other than the curable resin material *c* present in the vicinity of the periphery of the cap member is cured in order to remove the cap member and the resin film A (claim 25).

Preferably, at least one additional resin layer is provided after the resin layer is provided (claim 26).

Another aspect of the present invention is an apparatus for making an optical recording medium comprising means for placing a disk cap member on a recording medium comprising a circular substrate having a central hole so as to close the central hole, the diameter of the disk cap member being equal to or greater than that of the central hole; means for supplying a liquid resin material a that covers a step formed by the cap member and the recording medium; means for curing the resin material a to form a resin film A; means for supplying a curable resin material *c* for forming a resin layer on the cap member; means for rotating the recording medium to spin-spread the curable resin material *c*; and means for curing the curable resin material *c* (claim 27). Advantages of the Invention

According to the method and apparatus for making an optical recording medium of the present invention, an optical recording medium that is provided with a resin layer having a uniform thickness and can suppress air trapping and formation of bubbles, can be produced.

Brief Description of the Drawings

[Fig. 1] Figs. 1(a) and 1(b) are schematic views of a recording medium used in a method according to the present invention; Fig. 1(a) is a top view of the recording medium, and Fig. 1(b) is a cross-sectional view at a line L1 of the recording medium in Fig. 1(a).

[Fig. 2] Fig. 2 (a) to Fig. 2(c) are schematic views illustrating a state in which a cap member is placed on a recording medium and a resin film A is formed; Fig. 2(a) is a top view of the recording medium, and Figs. 2(b) and 2(c) are cross-sectional views at a line L2 of the recording medium in Fig. 2(a).

[Fig. 3] Fig. 3(a) and Fig. 3(b) are schematic cross-sectional views illustrating an embodiment of placing a cap member 9 and forming a resin film A when the diameter of the cap member 9 is substantially identical to the diameter of the central hole 2 of a recording medium 1.

[Fig. 4] Fig. 4(a) to Fig. 4(c) are perspective views illustrating an embodiment of a cap member used in a method of the present invention.

[Fig. 5] Fig. 5(a) to Fig. 5(c) are schematic cross-sectional views illustrating an embodiment of a method of applying a resin material a and a method of pressing a cap member.

[Fig. 6] Fig. 6(a) to Fig. 6(d) are schematic cross-sectional views illustrating an embodiment of an operation for applying a resin material a on a circle outer than the periphery of a cap member and an embodiment of an operation for applying the resin material a on a circle at a position corresponding to the diameter of the cap member.

[Fig. 7] Fig. 7(a) to Fig. 7(d) are schematic cross-sectional views illustrating an embodiment of a positional relationship among a substrate, a resin film A, and a cap member.

[Fig. 8] Fig. 8(a) is a schematic cross-sectional view of an embodiment of an optical recording medium including a substrate having a protrusion, and Figs. 8(b) to Fig. 8(d) each show a state in which a cap member is placed on a recording medium including a substrate having a protrusion and a resin film A is formed.

[Fig. 9] Fig. 9(a) to Fig. 9(c) are schematic cross-sectional views illustrating an embodiment of a process for forming a transparent resin layer in a method for forming an optical medium of the present invention.

[Fig. 10] Fig. 10(a) to Fig. 10(c) are schematic cross-sectional views for illustrating a method for removing a cap member.

[Fig. 11] Fig. 11(a) is a schematic cross-sectional view when a transparent resin layer is formed using a photomask that prevents curing a curable resin material $c$ in the vicinity of the periphery of a cap member; Fig. 11(b) is a schematic cross-sectional view illustrating removing a cap member 9 and a curable resin material $c$, and Fig. 11(c) is an enlarged view of a portion represented by alphabet T in Fig. 11(b).

[Fig. 12] Fig. 12(a) and Fig. 12(b) illustrate a method for measuring a remnant in Examples 11 to 14.

[Fig. 13] Fig. 13 illustrates a shape of a cap member used in Comparative Example 2.

[Fig. 14] Fig. 14(a) to Fig. 14(c) illustrate a conventional method for making an optical recording medium.

[Fig. 15] Fig. 15 is an enlarged schematic view of a portion of a cross-section of an optical recording medium produced by a conventional method.

[Fig. 16] Fig. 16 is a schematic view illustrating a state in which a cap member is placed on a recording medium and a resin film A is formed.

[Fig. 17] Fig. 17 is a functional block diagram illustrating a basic configuration of an apparatus for making an optical recording medium according to an embodiment of the present invention.

Reference Numerals

1,1',101 recording medium
2,102 central hole
3,3',103 substrate
4,104 read/write functional layer
5 reflective layer
6 dielectric layer
7 recording layer
8 dielectric layer
9,105 cap member
10,10',10" optical recording medium
11,106 transparent resin layer

12 protrusion
13 transparent resin layer inside an incision
20 platform balance
21 support
22 jig
30,31 intermediate
900 apparatus for making an optical recording medium
900a conveying means
901 recording medium supplying unit
902 cap member-placing unit
903 resin material supplying unit
904 resin material curing unit
905 curable resin material supplying unit
906 curable resin material spin-spreading unit
907 curable resin material curing unit
908 resin film cutting unit
909 cap member-removing unit
910 optical recording medium recovering unit

Best Mode for Carrying Out the Invention

The present invention will now be described in detail. The present invention, however, should not be limited to the following description and can be modified within the scope of the gist.

A method for making an optical recording medium of the present invention (hereinafter, may be referred to as "method of the present invention") includes placing a disk cap member on a recording medium comprising a circular substrate having a central hole so as to close the central hole wherein the diameter of the disk cap member is equal to or greater than that of the central hole, while forming a resin film A by curing a liquid resin material a so as to cover a step between the disk cap member and the recording medium; supplying a curable resin material $c$ for forming a resin layer on the cap member; rotating the recording medium to spin-spread the curable resin material $c$ and curing the curable resin material $c$ during or after the spin spreading to form the resin layer on the recording medium.

In the present invention, a transparent resin layer is primarily used as the resin layer. Thus, the transparent resin layer is exemplified as the resin layer in the following description. The term "transparent resin layer" represents such a transparent layer that can transmit light (generally laser light) to enable satisfactory reading and writing.

Throughout the following description, a transparent resin layer, which is generally called a cover layer in a Blu-ray Disc or the like, is primarily explained. The transparent resin layer, however, should not be limited to the cover layer. For example, a scratch-resistant layer having high hardness, generally called a hard coat layer, is provided on the cover layer in some of the Blu-ray Discs. This hard coat layer is also included in the transparent resin layer. In such a case, the cover layer and the hard coat layer may be consecutively formed while the cap member is placed. Alternatively, after the cover layer is formed and the cap member is removed, the hard coat layer may be formed.

Furthermore, an adhesive layer used for DVD bonding, and an intermediate layer provided to avoid light interference in a multilayer optical recording medium having multiple recording layers are included in the transparent resin layer.

Throughout the specification, the term "recording medium" represents an objective comprising a read/write functional layer (will be described below), and one or more optional layers formed on a substrate. The term "optical recording medium" represents an objective comprising a resin layer (for example, a transparent resin layer) formed on the recording medium. In other words, an "optical recording medium" from which a resin layer (for example, a transparent resin layer) is removed corresponds to the "recording medium."

In some of the drawings referred to in the specification, the ratio of the scales of the thickness to the diameter of the substrate of the recording medium or optical recording medium is magnified than in real one for better understanding of the present invention.

[1. Recording medium]

The recording medium used in the method of the present invention will now be described.

In general, the recording medium comprises a circular substrate having a central hole and a read/write functional layer thereon.

[1-1. Read/write functional layer]

The read/write functional layer can read and write information signals or can merely read the signals. This layer may be composed of a single layer or multiple layers. The read/write functional layer can have various layer configurations according to the functions of optical recording media, for example, a read-only memory medium (ROM medium), a recordable medium allowing a single writing operation (write-once medium), and a medium allowing data to be written repeatedly (rewritable medium). The read/write functional layer is categorized into a substrate surface incident type and a film surface incident type according to the incident direction of the laser light for writing and reading. In the present invention, it is preferred that a read/write functional layer of a film surface incident type be used in view of use of blue laser light and high recording density. Thus, the read/write functional layer of a film surface incident type will be described in the following description.

(Embodiment of ROM medium)

In a ROM medium, the read/write functional layer represents a reflective layer that is provided on a substrate and has concentrically or spirally arrayed prepits. Examples of materials for the reflective layer generally include metals and alloys of Al, Ag, and Au or the like. The read/write functional layer is a reflective layer formed by depositing an Al, Ag, or Au reflective layer on the substrate by sputtering.

(Embodiment 1 of write-once medium)

In a write-once medium of a film-surface incident type, the read/write functional layer generally includes a reflective layer and a recording layer provided on a substrate. Furthermore, the recording layer may be overlaid by a buffer layer composed of inorganic materials (for example, $ZnS/SiO_2$). In such a case, the reflective layer, the recording layer, and the buffer layer constitute the read/write functional layer.
Examples of materials for the reflective layer generally include metals and alloys of Al, Ag, and Au or the like. The reflective layer may be formed as in the ROM medium. The buffer layer is generally formed by sputtering.
Materials for the recording layer of the write-once medium are generally organic dyes. Examples of such organic dyes include macrocyclic azanulene dyes, e.g. phthalocyanine dyes, naphthalocyanine dyes, and porphyrin dyes; polymethyne dyes, e.g. cyanine dyes, merocyanine dyes, and squarylium dyes; anthraquinone dyes; azlenium dyes; metal-complex azo dyes, and metal-containing indoaniline dyes. In particular, metal-complex azo dyes, which are excellent in decay resistance and light stability, are preferred.
In order to form a recording layer using the organic dye, a solution of the organic dye is generally applied by any coating process, for example, spin coating, spray coating, dip coating, or roll coating or the like. Examples of usable solvents generally include ketone alcohol solvents, such as diacetone alcohol and 3-hydroxy-3-methyl-2-butanone; cellosolve solvent, such as methyl cellosolve and ethyl cellosolve; perfluoroalkylalcohol solvent, such as tetrafluoropropanol and octafluoropentanol; and hydroxyethyl solvents, such as methyl lactate and methyl isopropionate.
The thickness of the recording layer is not limited because the optimum thickness depends on the recording method, for example. The thickness that can achieve adequate modulation is generally at least 5 nm, preferably at least 10 nm, and more preferably at least 20 nm. In view of light transmission, the thickness is generally 3 $\mu$m or less, preferably 1 $\mu$m or less, and more preferably 200 nm or less.

(Embodiment 2 of write-once medium)

In another embodiment of the write-once medium of a film-surface incident type, the read/write functional layer generally includes a reflective layer, a dielectric layer, a recording layer, and a dielectric layer provided on a substrate.
Examples of materials for the reflective layer generally include metals and alloys of Al, Ag, and Au or the like. The reflective layer may be formed as in the ROM medium.
Generally used materials for the dielectric layer are inorganic materials (typically $ZnS/SiO_2$ and GeCrN). The thickness of the dielectric layer generally ranges from 0.5 nm to 50 nm. The dielectric layer may be a laminate of multiple layers of different inorganic materials, for example, a laminate of a $ZnS/SiO_2$ layer and a GeCrN layer, according to demand. The dielectric layer is deposited generally by sputtering.
Materials generally used for the recording layer are inorganic materials, for example, calcogenic alloy films composed of Ge·Te and Ge·Sb·Te; a bilayer films such as Si/Ge and Al/Sb; BiGe nitride; SnNb nitride and Te oxide. The thickness of the recording layer is generally ranges from 1 nm to 50 nm. The recording layer is formed generally by sputtering.

(Embodiment of rewritable medium)

In the rewritable medium of a film-surface incident type, the read/write functional layer generally includes a reflective layer, a dielectric layer, a recording layer, and a dielectric layer provided on a substrate.

The reflective layer, the dielectric layer, and the recording layer are identical to those in "Embodiment 2 of write-once medium". However, the recording layer should be composed of a material that can accept reversible write/read operations. Examples of such materials include SbTe systems, GeTe systems, GeSbTe systems, InSbTe systems, AgSbTe systems, AgInSbTe systems, GeSb systems, GeSbSn systems, InGeSbTe systems, and InGeSbSnTe systems. Among these, it is preferred the recording layer be primarily composed of Sb that increases the crystallization rate.

(Read/write region)

The read/write functional layer has a read/write region. When the read/write functional layer has a disk shape having a central hole, the read/write region has an inner diameter that is greater than the inner diameter of the read/write functional layer and an diameter that is smaller than the diameter of the read/write functional layer.

(Number of recording layers)

In "Embodiment of ROM medium", "Embodiment 1 of write-once medium", "Embodiment 2 of write-once medium", "Embodiment of rewritable medium", a plurality of recording layers may be provided to increase storage capacity. In such a case, the number of the recording layers is generally 2 or more and preferably three or more in view of storage capacity. The maximum number of the recording layers is generally five.

[1-2. Substrate]

The substrate is a circular substrate having a central hole. The shape of the circular substrate is not limited. For example, the shape of the substrate may be elliptical or polygonal. The substrate generally has a discoid shape having a central hole.

Any materials can be used for the substrate without restriction. In general, plastics, metals, and glass are used because these materials have moderate processability and rigidity. In the optical recording medium of a substrate plane incident type, the substrate must be transparent to the incident laser light. In the optical recording medium of a film-surface incident type, however, the substrate is not necessary to be transparent.

A metal or glass substrate can typically be produced as follows: After a thin resin layer that can be cured by light or heat is formed on a metal or glass plate, a groove is formed on the resin layer. A plastic substrate is generally formed by injection molding. Injection molding enables one-shot production of the final substrate profiles, for example, a disk shape and a surface guide groove.

Examples of injection-moldable plastic materials include polycarbonate resins used in conventional CDs and DVDs, polyolefin resins, acrylic resins, and epoxy resins. Preferably, the substrate has a thickness in the range of 0.5 mm to 1.2 mm.

The substrate generally has a guide groove for tracking.

The track pitch depends on the wavelength of the laser light used for writing and reading on the optical recording medium. For example, a CD optical recording medium has a track pitch of 1.5 to 1.6 $\mu$m. A DVD optical recording medium has a track pitch of 0.7 to 0.8 $\mu$m. A blue-laser optical recording medium has a track pitch of 0.2 to 0.5 $\mu$m.

The depth of the groove also depends on the wavelength of the laser light used for writing and reading on the optical recording medium. For example, a CD optical recording medium has a groove depth of 10 to 300 nm. A DVD optical recording medium has a groove depth of 10 to 200 nm. A blue-laser optical recording medium has a groove depth of 10 to 200 nm.

[1-3. Embodiment of recording medium]

(Embodiment of recording medium)

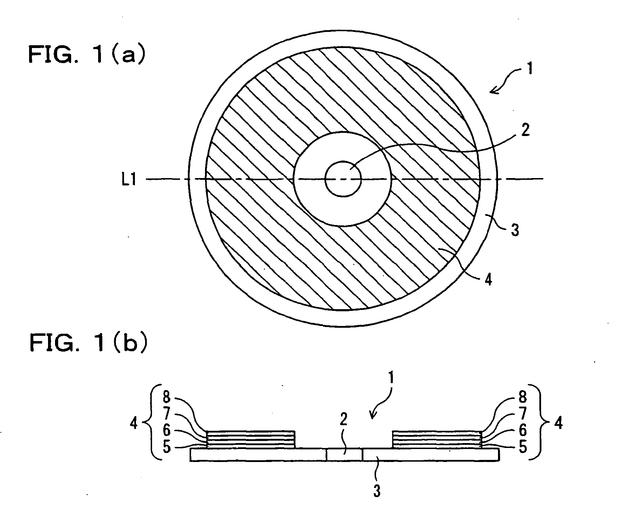

Figs. 1(a) and 1(b) are schematic views illustrating an embodiment of a structure of a recording medium used in the method of the present invention: Fig. 1(a) is a top view of the recording medium, and Fig. 1(b) is a cross-sectional view at a line L1 of the recording medium shown in Fig. 1(a). The recording medium 1 shown in Figs. 1(a) and 1(b) is an example of the "rewritable medium" in which a annular-shape read/write functional layer 4 is formed on a annular substrate 3 having a central hole 2. With reference to Fig. 1(b), the read/write functional layer 4 comprises a reflective layer 5, a dielectric layer 6, a recording layer 7, and another dielectric layer 8 in sequence.

When the substrate is formed by resin molding, the central hole is also simultaneously formed by the molding. Alternatively, the substrate may be formed as follows: A substrate without a central hole is formed, and then a central hole is formed by punching before formation of a cover layer. In general, the diameter of the central hole ranges from 5 mm to 30 mm. The typical diameter of the substrate is about 120 mm.

[2. Preparation of transparent resin layer]

[2-1. Formation of resin film A]

In the method of the present invention, a disk cap member is placed on the recording medium so as to close the central hole in which the diameter of the cap member is greater than the diameter of the central hole of the substrate, while a resin film A that covers a step formed by the disk cap member and the recording medium is formed.

A microlevel step is generated between the periphery of the cap member and the substrate (or the recording medium). Furthermore, imperfect junction between the cap member and the substrate (or the recording medium) will cause various phenomena, such as trapping of bubbles by the transparent resin layer during the formation of the transparent resin layer (generation of bubbly foreign matter), nonuniformity in thickness at the end of the transparent resin layer, and remaining of the material used for the transparent resin layer on the substrate after removal of the cap member. The resin film A covering the step and the junction can suppress such phenomena.

The covering effects of the resin film A are as follows:

(a) Bonding of the disk cap member to the recording medium (substrate) (adhesiveness);
(b) Blocking of air turbulence between the recording medium (substrate) and the cap member (blocking ability); and
(c) Covering the step between the recording medium (substrate) and the cap member or irregularities of the substrate itself. This facilitates flow of a curable resin material $c$ (will be described below) (smoothing by covering). As a result, the transparent resin layer has reduced film irregularities and bubbly foreign matter, and a uniform thickness can be obtained.

Although the planar shape of the cap member does not have to be a perfect circle, it is preferred to make a circle as perfect as possible in order to prevent irregular rotation and to achieve uniform coating.

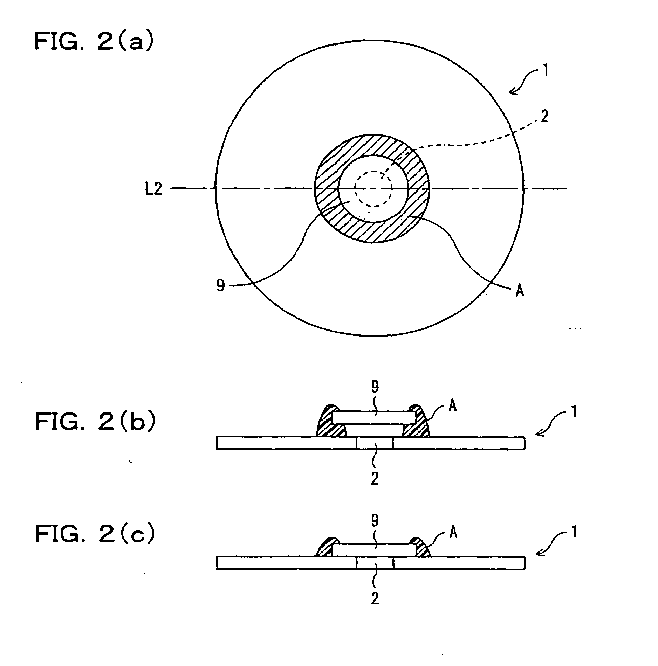

Figs. 2(a) to (c) are schematic views illustrating a state in which the cap member is placed on the recording medium while the resin film A is formed in the method of the present invention. Fig. 2(a) is a top view of the recording medium, Figs. 2(b) and (c) are cross-sectional views at a line L2 of the recording medium shown in Fig. 2(a). In Figs. 2 (a) to 2(c), components identical to those shown in Fig. 1 are denoted by the same reference numerals. The substrate 3, the read/write functional layer 4 (the reflective layer 5, the dielectric layer 6, the recording layer 7, and the dielectric layer 8) of the recording medium 1 are not depicted.

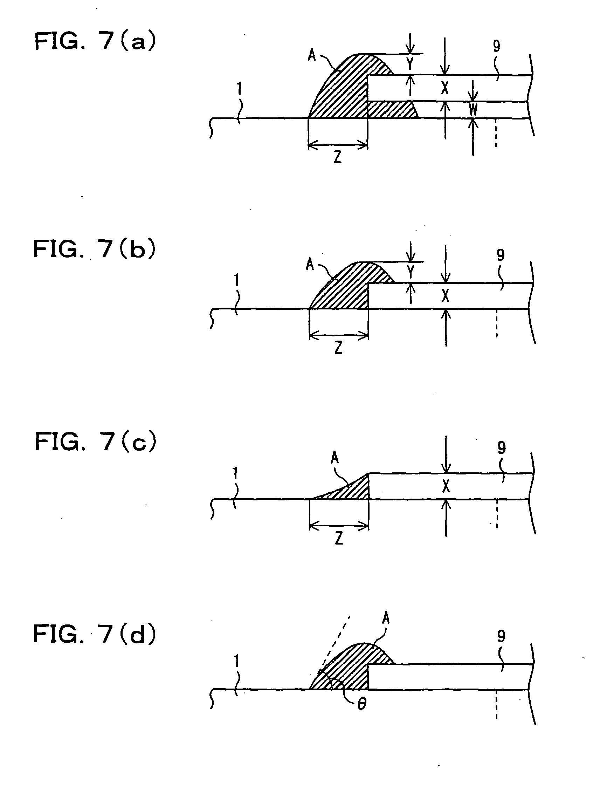

With reference to Fig. 2(a), the disk cap member 9 having an diameter greater than the diameter of the central hole 2 of the substrate of the recording medium 1 is placed so as to close the central hole 2 of the substrate, while the resin film A covering the step formed by the cap member 9 and the recording medium 1 is formed. The resin film A, as shown in Fig. 2(b), may be formed so as to close a spacegap between the recording medium 1 and the cap member 9 that are separately disposed. Alternatively, as shown in Fig. 2(c), the resin film A may be formed so as to cover the recording medium 1 and the cap member 9 that are firmly stick to each other. In both cases, the step formed by the recording medium 1 and the cap member 9 is covered by the resin film A. The positional relationship among the recording medium 1, the cap member 9, and the resin film A will be described below with reference to Figs. 7(a) to (c).

In order to achieve high adhesiveness, high blocking effect, and smooth covering, the resin film A is prepared by curing a liquid resin material $a$. The liquid resin material a can readily spread uniformly. Thus, high adhesiveness and high blocking effect can be achieved by the resin film A. This can prevents trapping of bubbles into the transparent resin layer by air turbulence and streaky nonuniformity in thickness of the transparent resin layer. Throughout the specification, "liquid" in the resin material represents liquid under normal processing environments (0°C to 50°C, 0.9 to 1.1 atm).

Usable materials for the resin film A are curable resin materials. The curing mode of the resin material is not restricted. For example, solidification by cooling from a melt state or drying solidification by evaporation of a solvent may be employed. However, thermally curable resin materials and photo-curable resin materials are generally used.

Preferably, the resin material $a$ is a photocurable resin material. The use of the photocurable resin material improves process capability and facilitates formation of smooth covering. In general, a photocurable resin material, which exhibits a high curing rate, improves process capability. Furthermore, the shape of the resin film A can be controlled by the timing of the light irradiation. Thus, the adhesion among the resin material $a$, the substrate, and the cap member can be readily controlled. In addition, the use of the photocurable resin material can make smooth covering.

Such photocurable resin materials are, for example, UV-curable resin materials. Examples of usable UV-curable resins include radical-type (radical-polymerizable) UV-curable resins and cation-type (cation-polymerizable) UV-curable resins. Radical-type UV-curable resins that are generally used are composition containing UV-curable compounds and photoinitiators as essential components. Examples of radical-type UV-curable compounds are polymerizable monomer components such as monofunctional (meth)acrylate monomers and polyfunctional (meth)acrylate monomers. These compounds may be used alone or in combination. Herein, the term (meth)acrylate refers to acrylate and methacrylate. Examples of preferred photoinitiators are of a photocleavage type and a hydrogen abstraction type.

It is preferred in the present invention that the resin film A be prepared by curing a UV-curable resin precursor primarily composed of a radical-polymerizable acrylic ester.

Cation-type UV-curable resins are, for example, epoxy resins containing cation-polymerizable photoinitiators. Examples of the epoxy resins include bisphenol A-epichlorohydrin types, alicyclic epoxy resins, long-chain aliphatic types, brominated epoxy resins, glycidyl ester types, glycidyl ether types, and heterocyclic types. It is preferred to use epoxy resins less containing free chlorine and chloride ions. The content of chlorine or chloride ions is preferably 1 weight % or less and more preferably 0.5 weight % or less. Examples of the cation-polymerizable photoinitiators include sulfonium salts, iodonium salts, and diazonium salts.

In order to prepare a resin film A having a satisfactory shape, preferably the resin material a has moderate viscosity and moderate surface tension (wettability). In detail, preferably the resin material a has a surface tension exceeding 20 (mJ/m$^2$). The surface tension of the resin material $a$ is preferably in the range of 0.5 times to 2 times the critical surface tension CSC of the cap member and in the range of 0.5 times to 2 times the critical surface tension CSS of the recording medium in contact with the resin material $a$. Throughout the specification, the term "critical surface tension" represents the surface tension of a liquid at $\theta=0$ where $\theta$ is a contact angle between the liquid and a solid. The critical surface tension is explained in detail in, for example, page 42 of "Secchakuzai no Jissai Chishiki by Toshinao Okitsu (2nd edition), published in May 23, 1996 by TOYO KEIZAI Inc.)".

In contact of solid with liquid, a large surface tension of the solid leads to a small angle of contact that causes an increase in wettability. It is preferred that the surface tension be slightly greater than that of the solid in order to achieve an angle of contact of 90° or less. Since the resin material a has moderate viscosity, the angle of contact is large immediately after coating and comes to equilibrium a short while later.

The viscosity (viscosity at room temperature (25±5°C)) of the liquid resin material $a$ is generally 30 mPa·s or more and preferably 50 mPa·s or more. The viscosity of the resin material a within such a range leads to satisfactory surface tension between the cap member and the recording medium, resulting in an increase in selectivity of the resin material $a$.

In addition, the liquid resin material a has a viscosity of generally 5000 mPa·s or less, preferably 3000 mPa·s, and more preferably 1000 mPa·s or less. In a viscosity of the resin material a within such a range, the shape of the resin film A is readily controllable while the surface tension between the cap member and the recording medium is satisfactory. Thus, a variety of resin materials a can be used.

The viscosity of the resin material a can be adjusted by changing the type of the resin material and modifying the proportion among the constituent components. Alternatively, the viscosity of the resin material a can be adjusted by the use of a low-viscosity solvent.

The cap member generally used is disk-shaped. The diameter of the cap member should be greater than the diameter of the central hole of the recording medium.

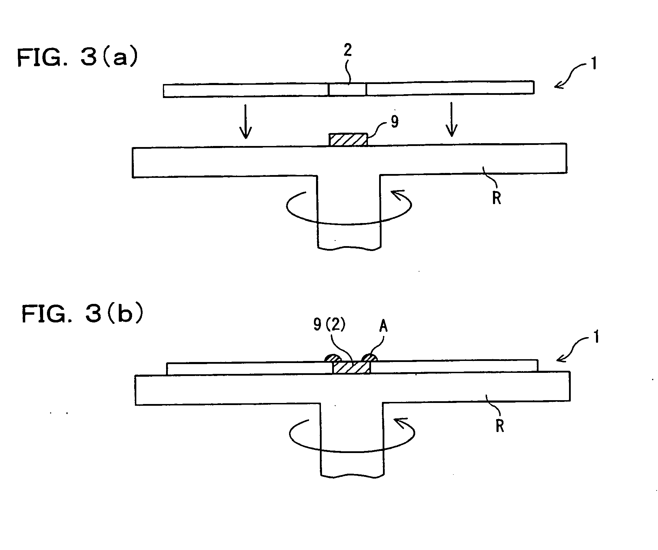

The following case is that the diameter of the cap member is substantially equal to the diameter of the central hole of the recording medium. When the diameter of the cap member is substantially equal to the diameter of the central hole of the recording medium, the cap member can be tightly fit in the central hole of the recording medium. Figs. 3 (a) and (b) are schematic cross-sectional views illustrating placing the cap member 9 and forming the resin film A when the diameter of the cap member 9 is substantially equal to the diameter of the central hole 2 of the recording medium 1. In Figs. 3 (a) and (b), components identical to those shown in Figs. 1 and 2 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

With reference to Fig. 3(a), the cap member 9 is fixed in the center of the turn table R, the central hole 2 of the recording medium 1 is fit in the cap member 9. As a result, the cap member 9 closes the central hole 2 of the recording medium 1. With reference to Fig. 3(b), a resin film A is formed so as to cover the step between the cap member 9 and the central hole 2. In Fig. 3(a), the recording medium 1 is placed on the cap member 9. By contraries, the cap member 9 may be placed on the recording medium 1.

It is preferred in the present invention that the diameter of the cap member be greater than the diameter of the central hole of the optical recording medium. When the diameter of the cap member is greater than the diameter of the central hole of the optical recording medium, the resin material a does not readily flow into the central hole during the formation of the resin film A by application of the liquid resin material a (will be described in further detail below). Thus, if the recording medium is fixed to the turn table R by suction (vacuum system), for example, inflow, causing system failure, of the resin material a into the vacuum system can be suppressed. Since the resin material a does not flow into the central hole, the remnant of the resin film A does not remain in the central hole, resulting in satisfactory operation of the optical recording medium.

If the diameter of the cap member is greater than the diameter of the central hole of the optical recording medium, the diameter of the cap member is generally at least 1 mm and preferably at least 2 mm greater than the diameter of the central hole of the recording medium. When the diameter of the cap member and the diameter of the central hole are set to this relationship, the cap member has sufficient allowance to decentering of the central hole. As a result, design flexibility of the apparatus increases.

The difference between the diameter of the cap member and the diameter of the central hole of the recording medium is generally 30 mm or less and preferably 25 mm or less.
When the relationship between the diameter of the cap member and the diameter of the central hole is set as above, deformation of the cap member is suppressed. Furthermore, the cap member can be readily removed (the way of removing the cap member will be described in detail below).
Embodiments of such a cap member will now be described.

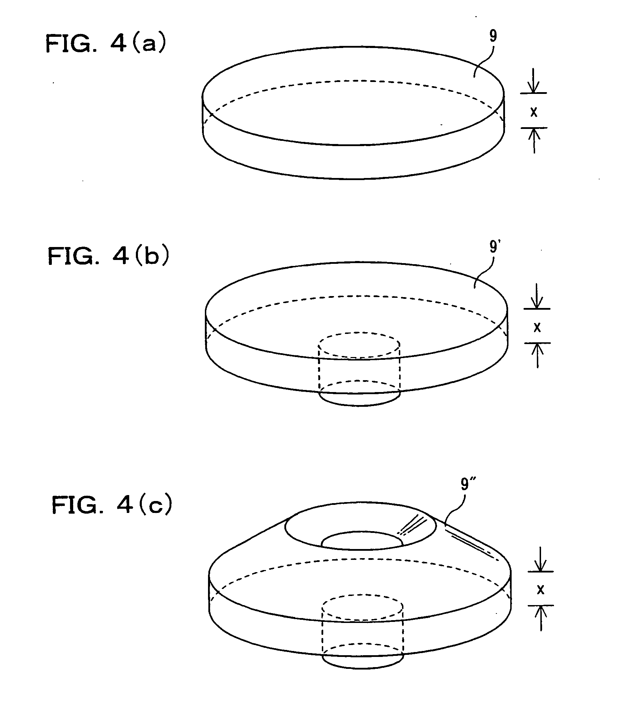

Figs. 4(a) to 4(c) are perspective views of embodiments of the cap member used in the method of the present invention. The cap member 9 shown in Fig. 4(a) is a thin cylindrical shape. Such a cylindrical shape can be readily produced. The cap member 9' shown in Fig. 4(b) has a guide that can be inserted into the central hole of the recording medium to ensure the accuracy of position. The cap member 9" shown in Fig. 4(c) has a central depression to suppress striated defects occurring on the transparent resin layer and to store the curable resin material $c$ and a slope to control the flowability of the curable resin material $c$. Since the cap member 9" is thick, it has an advantage of high rigidity. Figs. 4(a) to 4(c) are shown as examples, and the structure of the cap member usable in the method of the present invention should not be limited to these examples.

Preferably, the periphery of the cap member has a thickness that is preferably five times or less, more preferably 4 times or less, and most preferably 3 times or less the thickness of the transparent resin layer to be formed. A thickness of the periphery of the cap member within this range can reduce the step between the cap member and the recording medium. As a result, a proper resin film A can be readily produced. In other words, control of the step to the above range prevents intrusion of bubbles into a gap between the cap member and the recording medium during spin spreading of the curable resin material $c$. Furthermore, a step within the above range improves uniformity of the step itself. Thus, the uniformity in thickness of transparent resin layer can be further improved. Meanwhile, from a practical viewpoint, the thickness of the periphery of the cap member is generally at least 0.1 times the thickness of the transparent resin layer to be formed. A thickness of the periphery of the cap member within this range ensures mechanical strength and ready handling in production processes and increases the strength of the cap member. Thus, the cap member and the resin film A can be readily detached from the recording medium after the formation of the transparent resin layer without damage of the cap member. In Figs. 4(a) to 4(c), symbol x represents the thickness of the periphery of the cap member.

Materials for the cap member can be chosen from metals, ceramics, plastics, paper, wood, and composites thereof. Plastics are preferable materials in view of processability and cost. Low-cost cap members may be disposable. As a result, the production apparatus can be readily produced.

Examples of materials for the cap member include polypropylene, polyethylene, polystyrene, nylons, polyethylene terephthalate (PET), polyvinyl chloride, polyvinyl alcohol, polyvinylidene chloride, ABS resins, polymethyl methacrylate (PMMA), epoxy resins, and cellulose triacetate resins. Among these materials for the cap member, polyethylene, polyethylene terephthalate, polypropylene, nylons, and polyvinyl chloride are preferred. Cap members of these materials can be readily available, inexpensive, and readily processable. Use of such a cap member facilitates the formation of a proper resin film A.

In particular, polyvinyl chloride is preferably used as a material for the cap member in order to reduce the remnant after detachment. Preferably the material has a 100% modulus of 3 MPa to 30 MPa.

The coating of the resin material $a$, placing of the cap member, and the formation of the resin film A are preferably carried out according to the following procedures: First, the resin material $a$ is applied on a circle corresponding to the diameter of the cap member on the recording medium. After the cap member is pressed to the resin material $a$, the resin material $a$ is cured to form the resin film A.

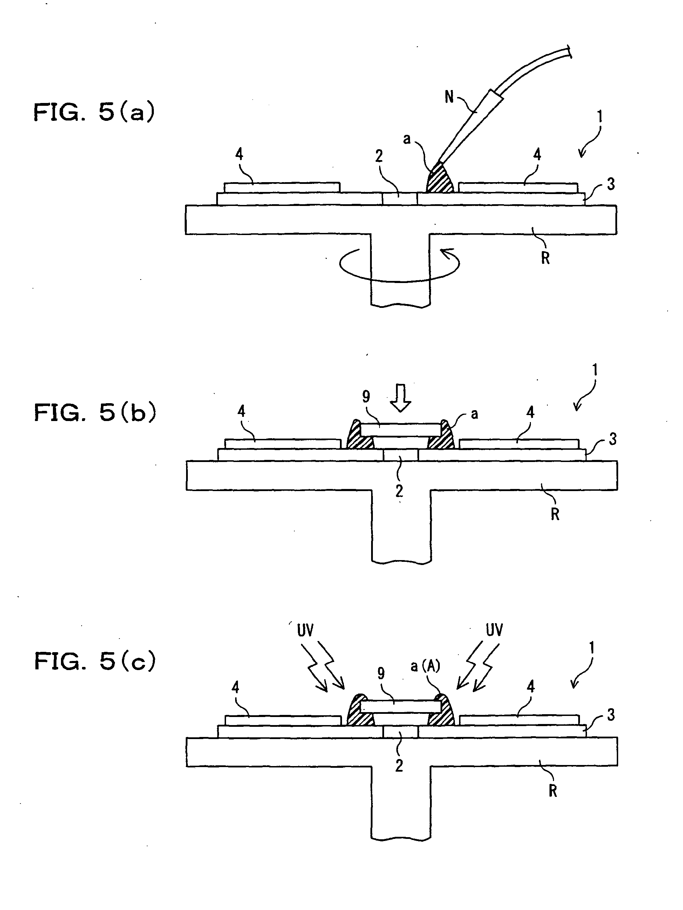

These procedures will now be described in detail with reference to Figs. 5(a) to 5(c). Figs. 5(a) to 5(c) are schematic cross-sectional views illustrating an embodiment of the coating of the resin material a and pressing of the cap member in the method of the present invention. In Figs. 5(a) to 5(c), components identical to those shown in Figs. 1 to 4 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

With reference to Fig. 5(a), the resin material $a$ is applied onto the recording medium 1 placed on the turn table R. In detail, the recording medium is placed on the turn table R, and the resin material $a$ is dispensed from a nozzle N and is applied while the turn table R is rotated. Alternatively, the nozzle N may be moved on a circle on the fixed turn table R. In Fig. 5(a), the resin material a used is a UV-curable resin. In such a way, the resin material a can be applied on a circle that corresponds to the diameter of the cap member 9 on the recording medium 1.

Since the dispense volume depends on the coating diameter, the dispense volume can be appropriately determined according to the coating diameter. A small dispense volume, however, tends to preclude uniform coating. In order to achieve uniform coating at a small dispense volume, precise coating using an expensive coating facility may be required. In coating using a general facility and a general nozzle, the dispense volume is generally 10 mg or more and preferably 30 mg or more. A dispense volume within this range facilitates the satisfactory formation of the resin film A. Meanwhile, the dispense volume is set to generally 1 g or less and preferably 500 mg or less. A dispense volume within this range ensures uniform coating on the circle. Furthermore, the toroidal coating region is not wavy even if decentering of the substrate and the surface irregularities occur. As described below, if the resin material *a* is applied twice, the toroidal coating is further satisfactorily carried out.

With reference to Fig. 5(b), the cap member 9 is pressed to the resin material *a*. Here, the resin material a flows towards the surface of the cap member 9 to cover the entire periphery of the cap member 9. The relationship among the viscosity of the resin material *a*, the surface tension of the resin material *a*, and the surface tension of the cap member 9 is controlled so that the resin material *a* perfectly covers the periphery of the cap member 9. It is preferred that the cap member 9 pressed to the resin material *a* be left for a certain time before the resin material *a* is cured in order to ensure the flow of the resin material *a*.

With reference to Fig. 5(c), the resin material *a* is cured in such a state to form the resin film A. In Fig. 5(c), the resin material *a* is cured by UV irradiation as an embodiment.

Control of the viscosity of the resin material *a* to be applied, the timing for placing the cap member 9, the pressure applied to the cap member 9, and the timing for curing the resin material a enables control of the adhesiveness, blocking ability, and smooth covering.

After the cap member is placed, the resin material *a* may be applied. The resin film A is formed by curing the resin material *a.*

In such a case, preferably the cap member is adhered to the recording medium. Furthermore, it is preferred that the resin material *a* be circularly applied to a position corresponding to the diameter of the cap member and the resin material *a* be cured to form the resin film A.

The adhesion of the cap member to the recording medium (substrate) facilitates the control of the shape of the resin film A and the operation. The adhesion prevents the movement of the cap member when the resin material *a* is applied. As a result, the resin film A can be formed in a desirable shape.

The adhesion is preferably carried out with a curable or tacky adhesive. The use of such an adhesive facilitates a parallel arrangement between the cap member and the recording medium (substrate). Also, the use of the adhesive enhances the blocking effect of the gap between the cap member and the recording medium. Thus, the resin material *a* barely flows into the central hole during coating of the resin material *a*. Accordingly, the dispense pressure of the resin material a can be increased, resulting in ready control of the shape of the resin film A. The curable adhesive is preferably composed of a photocurable resin having a viscosity in the range of 30 mPa·s to 5000 mPa·s. The use of such a photocurable resin facilitates the operation.

In addition to the method of forming the resin film A, a satisfactory resin film A can be readily formed by applying the resin material a twice. That is, the resin material *a* is circularly applied to a position outer than the periphery of the cap member on the recording medium, and the resin material *a* is circularly applied to a position corresponding to the diameter of the cap member. In this method, the resin material a circularly applied to a position outer than the periphery of the cap member functions as a "barrier (stop)" and suppresses the flow of the resin material *a* applied at a position corresponding to the diameter of the cap member towards the peripheral direction of the recording medium. As the result of such suppression of the flow, a larger amount of resin material *a* can be applied to a position corresponding to the diameter of the cap member. Accordingly, the shape of the resin film A can be formed with high reproducibility.

An embodiment of this process will now be described.

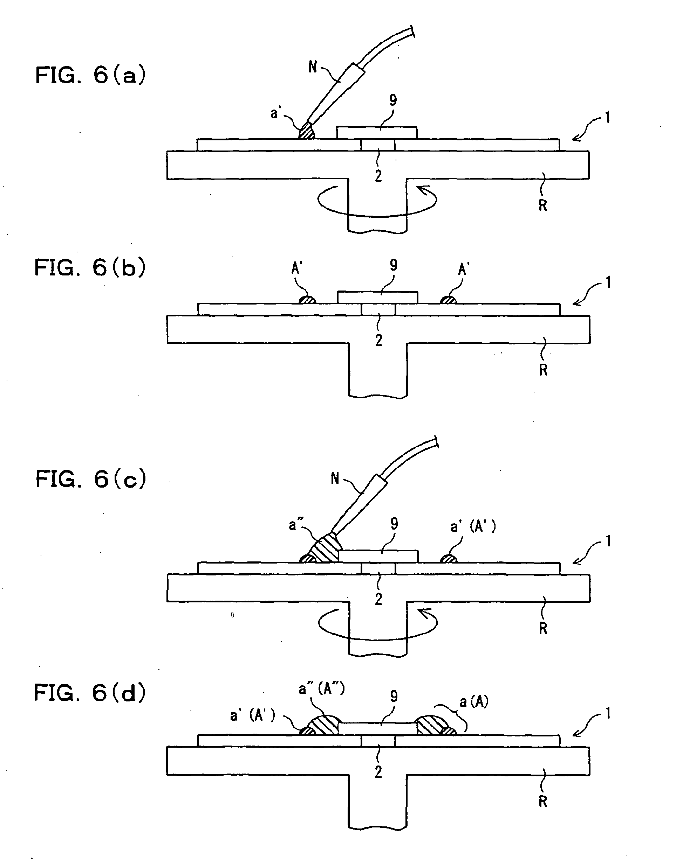

Figs. 6(a) to 6(d) are schematic cross-sectional views illustrating an embodiment of the operation for circularly applying the resin material a at a position outer than the periphery of the cap member and an embodiment of the operation for circularly applying the resin material *a* at a position corresponding to the diameter of the cap member. In Figs. 6(a) to 6 (d), components identical to those shown in Figs. 1 to 5 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

With reference to Figs. 6(a) and 6(b), a resin material a' is circularly applied at a position outer than the periphery of the cap member 9 placed so as to close the central hole 2 of the recording medium 1. Then, the resin material a' is cured to form a resin ring A'. Next, with reference to Figs. 6(c) and 6(d), a resin material a" is circularly applied at a position corresponding to the diameter of the cap member 9. Even if the resin material a" spreads towards the periphery of the recording medium 1, the resin ring A' blocks the flow of the resin material a". In such a state, the resin material a" is cured to form the final resin film A. As described above, since the resin ring A' blocks the resin material a", a change in the dispense pressure of the resin material a" can readily varies the height of resin film A, but not the width of the resin film A.

In this embodiment, the resin material a' is cured to form the resin ring A'. Alternatively, the resin materials a' and a" may be simultaneously cured. If the resin material a' has predetermined viscosity, the uncured resin material a' also functions as a "barrier (stop)". The resin material a' and the resin material a" are generally composed of a single material. Alternatively, these materials may be composed of different materials.

When the cap member 9 is adhered to the recording medium 1 in this embodiment, the bonded portion of the cap member 9 and the recording medium 1 functions as an inner "barrier (stop)" and the circularly applied resin material a' or resin ring A' functions as an outer "barrier (stop)". This double barrier function improves reproducibility of the shape of the resin film A.

Alternatively, the resin film A may be formed by the following process. After the resin material $a$ is applied to the periphery of the cap member, the cap member is firmly stacked with the recording medium with the resin material $a$. Then, the resin material $a$ is cured to form the resin film A.

Alternatively, the resin film A may be formed by the following process. A thin tacky layer (pressure-sensitive adhesive layer) is preliminarily formed in the vicinity of the periphery of the back surface of the cap member. The cap member is pressed onto the recording medium so that the cap member is fixed on the recording medium. Next, the resin material $a$ is circularly applied so as to cover the step between the cap member and the recording medium. The resin material $a$ is cured to form the resin film A. In this process, the tacky layer (pressure-sensitive adhesive layer) is preliminarily formed. Instead, the tacky layer (pressure-sensitive adhesive layer) may be circularly formed on the recording medium and the cap member may be pressed onto the tacky layer (pressure-sensitive adhesive layer) formed on the recording medium so that the cap member is fixed.

In the process using the tacky layer (pressure-sensitive adhesive layer), as shown in Fig. 6, the resin materials a' and a" may be formed to the resin film A, as described above.

In the process using the tacky layer (pressure-sensitive adhesive layer), the tacky layer (pressure-sensitive adhesive layer) prevents the flow of the resin materials $a$, a', and a" towards the back surface of the cap member. Preferably, the tacky layer (pressure-sensitive adhesive layer) is composed of a material that can be readily removed together with the cap member from the recording medium. In further detail, preferably, the remnant does not remain on the recording medium after the cap member is removed from the recording medium. In other words, the adhesive force required for the tacky layer (pressure-sensitive adhesive layer) is merely tentative adhesive force.

The resin film A is formed so as to extend along the periphery of the cap member outwardly on the recording medium (actually substrate). In this case, there are several possible positional relationships among the substrate, the resin film A, and the cap member.

Figs. 7(a) to 7(d) are schematic views illustrating the positional relationships among the substrate, the resin film A, and the cap member in the method of the present invention when the diameter of the cap member is greater than the diameter of the central hole of the recording medium. In Figs. 7(a) to 7(d), the cross-sections are partially enlarged. In Figs. 7(a) to 7(d), components identical to those shown in Figs. 1 to 6 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

In Figs. 7(a) to 7(c), x represents the thickness of the periphery of the cap member 9, y represents the distance from the periphery of the cap member 9 to the peak of the resin film A, and z represents the width of the resin film A extending from the periphery of the cap member 9 on the recording medium 1 (actually the substrate). Preferably, the following relationships hold:

$$ y \leq 5 \times x $$

$$ z \leq 20 \times x $$

When such relationships on x, y, and z holds, a satisfactory transparent resin layer can be readily formed. That is, if the distance y from the periphery of the cap member 9 to the peak of the resin film A is greater than five times the thickness x of the periphery of the cap member 9 (In Figs. 7(a) to 7(c), the thickness of the periphery of the cap member 9 is equal to the thickness of the cap member 9 because the cap member 9 is a disk), a uniform resin film A cannot be formed. As a result, striated defects that cause nonuniformity of the transparent resin layer would be readily formed. If the width z (if the width z of the resin film A extending from the periphery of the cap member 9 on the recording medium 1 (actually the substrate) is not constant along the periphery of the cap member 9, z is the minimum length of the resin film A extending from the periphery of the cap member 9 on the recording medium 1) of the resin film A extending from the periphery of the cap member 9 on the recording medium 1 is greater than 20 times thickness x (In Figs. 7(a) to 7(c), the thickness of the periphery of the cap member 9 is equal to the thickness of the cap member 9 because the cap member 9 is a disk) of the periphery of the cap member 9, the remnant of the resin film A will readily remain on the recording medium 1 when the cap member is detached after the transparent resin layer is formed. Furthermore, since large force is required to detach the cap member 9, the recording medium 1 may be damaged.

In view of material costs, y and z are preferably as much as small, and the following ranges are also effective:

$$y \leq 2 \times x$$

$$z \leq 10 \times x$$

In order to cover the step between the cap member 9 and the recording medium 1 surely, y and z preferably have the following lower limits:

$$0 \leq y$$

$$0.2x \leq z$$

Fig. 7(c) shows the positional relationship at y=0.

With reference to Fig. 7(a), the distance w between the cap member 9 and the recording medium 1 is generally 0 or more. The states at w=0 are shown in Figs. 7(b) and 7(c). Furthermore, w is generally 2x or less, preferably x or less, more preferably 0.5x or less, and most preferably 0.2x or less.

In general, the sum (w+x+y) of the thickness x of the periphery of the cap member 9, the distance y from the periphery of the cap member 9 to the peak of the resin film A, and the distance w between the cap member 9 and the recording medium 1 is x or more. Fig. 7(c) shows the state at w+x+y=x. Furthermore, the sum w+x+y is generally 20 times or less the thickness of the transparent resin layer. Within this range, the resulting transparent resin layer has a highly uniform thickness.

The resin film A that covers the step between the cap member and the recording medium has a gentle slope. This elucidates that the curable resin material *c* smoothly flows on the cap member towards the recording medium by spinning. Thus, the curable resin material *c* barely traps bubbles.

In order to enhance this effect, the angle (θ in Fig. 7(d), hereinafter referred to as "angle of the periphery of the resin film A" or "angle of the periphery") defined by the outer circumference of the resin film A and the recording medium 1 is preferably 30° or less and more preferably 25° or less. The angle θ of the periphery within this range can be controlled, for example, by adjusting the amount of the resin material a to be applied, the viscosity of the resin material *a*, and the wettability of the resin material *a* to the recording medium.

Furthermore, the resin film A has the following noticeable advantage. The resin film A can be formed so as to cover burrs that may be present at the periphery of the cap member.

The cap member can be formed by machining, molding, or punching. The periphery of the cap member tends to be edged in each processing steps. This phenomenon is noticeable if the thickness of the periphery of the cap member is as small as five times or less the thickness of the transparent resin layer. The edged periphery of the cap member may cause generation of burrs at the periphery of the cap member. Burrs protruding from the resin film A upon the formation of the transparent resin layer would lead to nonuniformity in the thickness of the transparent resin layer. Removal treatment of the burrs, for example, by filing causes deformation of the cap member and an increase in cap member production cost. Thus, the formation of the resin film A so as to cover the burrs of the cap member can moderate the affect of the burrs during the formation of the transparent resin layer.

Every step of 0.05 mm or more on the substrate of the recording medium is entirely covered with the resin film A, as described below.

In an optical recording medium of which the transparent resin layer is irradiated with laser light to read information, bumps such as a protrusion are provided on the substrate to prevent damaging of the transparent resin layer, in some cases.

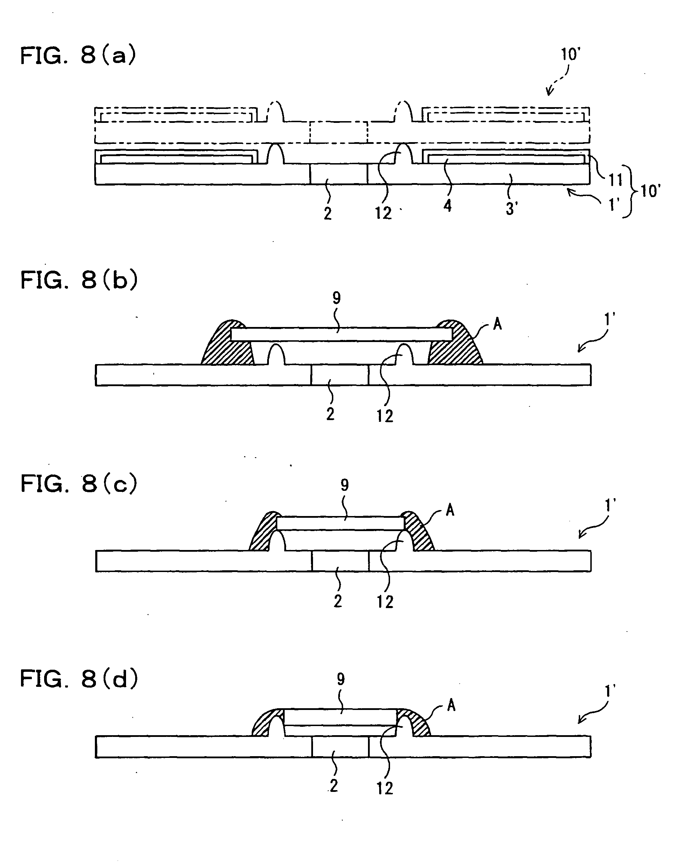

Fig. 8(a) is a schematic cross-sectional view illustrating an embodiment of an optical recording medium including a substrate having a protrusion. In Fig. 8(a), components identical to those shown in Figs. 1 to 7 are denoted by the same reference numerals. The optical recording medium 10' shown in Fig. 8(a) is a recording medium 1' that includes a read/write functional layer 4 on a circular substrate 3' having a central hole 2 and a transparent resin layer 11 on the read/write functional layer 4. The substrate 3' has a circular protrusion 12 surrounding the central hole 2. The other structure is the same as that of the substrate 3 shown in Figs. 1 to 7. Furthermore, the recording medium 1' and the optical recording medium 10' are the same as the recording medium 1 and the optical recording medium 10 shown in Figs. 1 to 7 except that a substrate 3' is used in place of the substrate 3 shown in Figs. 1 to 7. By using the substrate 3' having the protrusion 12, the transparent resin layer 11 does not come into contact with a substrate of the other optical recording medium when a plurality of optical recording media 10' and 10' are stacked. The height of such a protrusion 12 is generally 0.05 mm or more.

However, the bump of 0.05 mm or more, such as a protrusion 12, generally functions as a barrier in the formation of the transparent resin layer by spin coating, and causes disturbance of the flow of the curable resin material c. In addition, it causes bubble trapping by the curable resin material c. Thus, it is preferred in the present invention that all the bumps of 0.05 mm or more be entirely covered by the cap member and the resin film A.

Figs. 8(b) to 8(d) are schematic cross-sectional views illustrating a state in which a cap member is placed on a recording medium including a substrate having a protrusion and a resin film A is formed. In Figs. 8(b) to 8(d), components identical to those shown in Figs. 1 to 7 and Fig. 8(a) are denoted by the same reference numerals. The substrate 3', the read/write functional layer 4 (the reflective layer 5, the dielectric layer 6, the recording layer 7, and the dielectric layer 8) of the recording medium 1' are not depicted.

Fig. 8(b) illustrates an embodiment in which the diameter of the cap member 9 is greater than the diameter of the protrusion 12. As shown in the drawing, the cap member 9 is placed over the protrusion 12 and the resin film A is formed around the cap member 9. The protrusion 12 does not inhibit the formation of the transparent resin layer 11. The transparent resin layer 11 can be formed without touching the protrusion 12.

Fig. 8(c) illustrates an embodiment in which the diameter of the cap member 9 is substantially the same as the diameter of the peak of the protrusion 12. As shown in the drawing, the cap member 9 is placed over the protrusion 12 and the resin film A is formed around the cap member 9. The resin film A is formed outer than the outer periphery of the protrusion 12. Thus, the protrusion 12 does not inhibit the formation of the transparent resin layer 11. The transparent resin layer 11 can be formed without touching the protrusion 12.

Fig. 8(d) illustrates an embodiment in which the diameter of the cap member 9 is smaller than that of the peak of the protrusion 12. As shown in the drawing, the cap member 9 is placed inner than the peak of the protrusion 12 and resin film A is formed around the cap member 9. The resin film A is also formed on the protrusion 12. Thus, the protrusion 12 does not inhibit the formation of the transparent resin layer 11. The transparent resin layer 11 can be formed without touching the protrusion 12.

As described above, various bumps such as protrusions and unevenness on the recording medium and the substrate, as well as the above-mentioned protrusion, does not inhibit by control of the position of the cap member and the position of the resin film A. For example, the substrate may have a trace of a stamper holder in some cases. Since the trace of the stamper holder can be covered by the cap member and the resin film A according to the above-mentioned method, a satisfactory transparent resin layer can be formed.

Another advantage of the resin film A is adhesion between the cap member and the recording medium. The adhesion strength of the resin film A may be appropriately selected to enhance the adhesion between the cap member and the recording medium. More particularly, it is preferred that the cap member be not detached from the recording medium when the recording medium is moved upwardly by sucking after the resin film A is formed.

During the production of the optical recording medium, the cap member may be sucked to shift the recording medium upwardly (or laterally). For example, if someone touches the periphery of the cap member for transportation, the surface of the transparent resin layer at this position may be contaminated. If a second transparent resin layer is continuously provided, such contamination may cause a fluctuation in thickness. Transportation by holding the inner and outer peripheral ends of the recording medium can prevent contamination of the transparent resin layer. However, this method leads to imprecise transportation and generates dust, resulting in a decrease in production yield. Consequently, transportation by sucking and holding the cap member will solve these problems. If the recording medium is detached from the cap member, the production yield of the optical recording medium decreases. Accordingly, the use of the resin film A having bonding force that does not cause detachment of the recording medium from the cap member when the recording medium is moved upwardly by sucking the cap member enables a production apparatus to be readily produced.

The control of the surface tension among the recording medium (substrate), the resin material a, and the cap member has the following advantages: The shape of the resin film A can be readily controlled; the remnant does not remain on the recording medium when the cap member is removed; and the cap member can be readily removed.

In case where bumps such as a trace of a stamper holder on the substrate are present relatively distant from a position corresponding to the diameter of the cap member on the recording medium; the following process can be employed. In addition to the resin film A covering the step between the cap member and the recording medium, a resin film B covering the step on the recording medium is formed, the curable resin material c is formed in a state in which the resin film A is physically separated from the resin film B.

Fig. 16 is a schematic view illustrating a state in which the resin film B covering the step between the cap member and the recording medium is physically separated from the resin film B covering the step present on the recording medium. In Fig. 16, components identical to those shown in Figs. 1 to 8 are denoted by the same reference numerals.

Although the recording medium 1" shown in Fig. 16 is basically identical to the recording medium 1 shown in Figs. 1 to 7, a step S1 is present relatively distant from a position corresponding to the diameter of the cap member 9 on the recording medium 1". In Fig. 16, in addition to the resin film A covering the step (referred to as S0 in Fig. 16) between the cap member 9 and the recording medium 1", the resin B covering this step S1 is formed so as to be physically separated from the resin film A.

As described above, by the formation of physically separated resin films A and B covering the steps S0 and S1, respectively, the total amount of the resin can be reduced compared with a case in which these steps S0 and S1 are covered with a single resin film A, and the shapes of the resin films A and B covering the steps S0 and S1, respectively, can be readily controlled.

Details of the material for the resin film B and the method of making the resin film B are basically identical to the material for the resin film A and the method of making the resin film A.

The resin film A and the resin film B may be formed of a single material or different materials, and preferably a single material in view of production efficiency of the optical recording medium.

The resin film A and the resin film B may be formed simultaneously by a single step or separately by multiple steps.

If three or more steps are present on the recording medium, these can be individually covered by physically separated resin films, if necessary.

[2-2. Formation of transparent resin layer]

In the method of the present invention, the resin film A is formed and then the curable resin material c for forming the transparent resin layer on the cap member. The recording medium is rotated to spin-spread the curable resin material c. Further, the curable resin material c is cured during or after the spin spreading to form a transparent resin layer on the recording medium.

The curable resin materials c used for forming the transparent resin layer are generally thermally curable resins and photocurable resins. Photocurable resin materials are preferred as a curable resin material c. The photocurable resin materials generally have high curing rates and exhibit excellent process capability. Furthermore, the curable resin material c being spin-spread can be irradiated with light, so that the viscosity of the curable resin material c varies. The resulting layer has a uniform thickness from the center to the periphery of the recording medium.

Typical photocurable resin materials are, for example, UV-curable resin materials. Examples of usable UV-curable resins include radical-type (radical-polymerizable) UV-curable resins and cation-type (cation-polymerizable) UV-curable resins. Radical-type UV-curable resins that are generally used are compositions containing UV-curable compounds and photoinitiators as essential components. Examples of radical-type UV-curable compounds are monofunctional and polyfunctional (meth)acrylate monomers. These compounds may be used alone or in combination. Herein, the term (meth)acrylate refers to acrylate and methacrylate. Examples of preferred photoinitiators are of a photocleavage type and a hydrogen abstraction type.

It is preferred in the present invention that the transparent resin layer be prepared by curing a UV-curable resin precursor primarily composed of a radical-polymerizable acrylic ester.

Cation-type UV-curable resins are, for example, epoxy resins containing cation-polymerizable photoinitiators. Examples of the epoxy resins include bisphenol A-epichlorohydrin types, alicyclic epoxy resins, long-chain aliphatic types, brominated epoxy resins, glycidyl ester types, glycidyl ether types, and heterocyclic types. It is preferred to use epoxy resins less containing free chlorine and chloride ions. The content of free chlorine or chloride ions is preferably 1 weight % or less and more preferably 0.5 weight % or less. Examples of the cation-polymerizable photoinitiators include sulfonium salts, iodonium salts, and diazonium salts.

In general, the photocurable resin material is a mixture of such as an oligomer as a main component constituting the backbone of the resin, a monomer as a reactive diluent, an initiator, and additives. Characteristics required for the transparent resin layer are high hardness, low curing shrinkage, high transmittance in a wavelength region for reading/writing on the recording medium, and low deterioration with age.

The hardness can be increased by modification of the molecular structure of the oligomer or use of a monomer having two or more functional groups to form a three-dimensional network. An excess amount of such multifunctional monomer leads to large curing shrinkage. In order to prevent such a disadvantage, the structure of the oligomer or the proportion between monomers may be modified.

The light transmittance in the read/write wavelength region depends on the backbone of the oligomer and the type and amount of the photoinitiator. Thus, these parameters can be modified to control the light transmittance.

The deterioration with age may result from evaporation and generation of corrosive components by degradation of uncured components in many cases. In order to suppress the deterioration with age, the composition of the mixture, particularly the type and amount of the photoinitiator must be carefully selected. However, the photoinitiator, which is not incorporated into the crosslinks of the resin, may gradually evaporate or elute. Accordingly, the amount of the photoinitiator to be used should be minimized.

The viscosity (viscosity at room temperature (25±5°C)) of the curable resin material c is generally 30 mPa·s or more and preferably 100 mPa·s or more. The viscosity of the curable resin material c within such a range leads to uniform application of the curable resin material c and thus a satisfactorily controlled thickness of the transparent resin layer. Within this range of the viscosity, the curable resin material c can be formed circularly or toroidally. In other words, the curable resin material c has flowability suitable for the formation of the transparent resin layer. Thus, the thickness of the transparent resin layer can be readily controlled. The flow of the liquid at the periphery of the substrate can also be controlled.

Furthermore, the viscosity (viscosity at room temperature (25±5°C)) of the curable resin material c is generally 5000 mPa·s or less and preferably 4000 mPa·s or less. The viscosity of the curable resin material a within such a range enables the spin-spread time to be controlled within a predetermined time, resulting in improved processability. Furthermore, the viscosity of the curable resin material a within the range can generally suppress a change in viscosity with temperature. Thus, this range is preferred in practical view.

It is preferred that the resin material a and the curable resin material c be composed of different materials to satisfy their inherent characteristics described above. However, these may be composed of a single material in some cases.

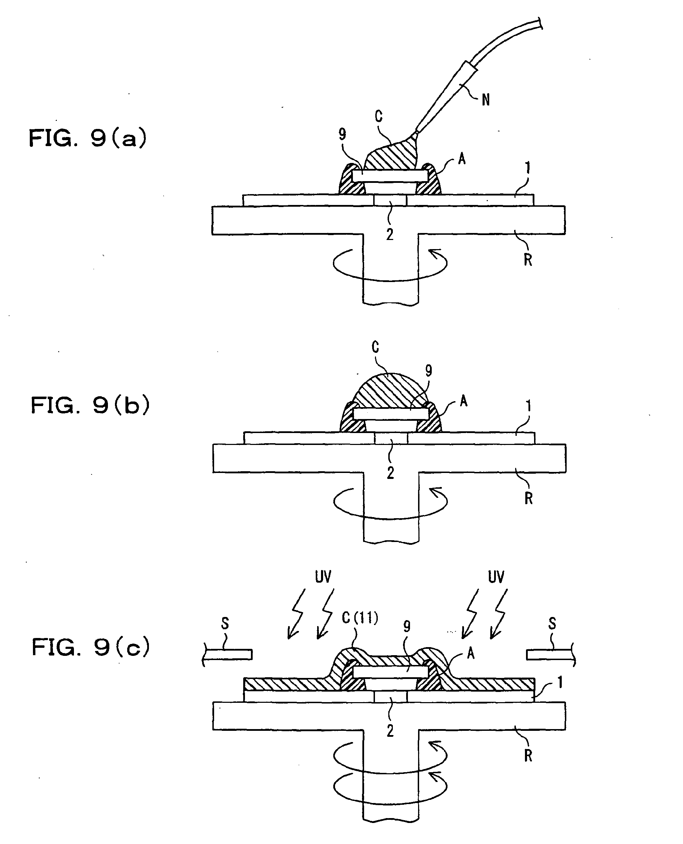

An embodiment of a process for forming the transparent resin layer according to the method of the present invention will now be described in detail with reference to Figs. 9(a) to 9(c). Figs. 9(a) to 9(c) are schematic cross-sectional views illustrating the embodiment of the process for forming the transparent resin layer according to the method of the present invention. In Figs. 9(a) to 9(c), components identical to those shown in Figs. 1 to 8 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

With reference to Fig. 9(a), a curable resin material c (UV-curable resin) for forming the transparent resin layer is supplied on the cap member 9 through a nozzle N. The nozzle N is moved above the recording medium 1, and as shown in Fig. 9(b), the turn table R is rotated at a high rate to spin-spread the curable resin material c. Preferably, the rotation rate should be gradually increased. The spin-spread curable resin material c is cured to form a transparent resin layer 11. As shown in Fig. 9(c), the curable resin material c is cured by being irradiated with UV rays during or after spin spreading. In order to control the thickness of the transparent resin layer 11 more precisely, the curable resin material c should be cured during spin spreading. The dose of UV rays for curing can be appropriately determined in view of the control of the thickness of the transparent resin layer 11.

In order to control the shape of the transparent resin layer 11 in the vicinity of the periphery of the recording medium 1, it is preferred that a shield (symbol S in Fig. 9(c)) be provided to cover a region of the edge of the recording medium during UV irradiation with spin spreading of the curable resin material c. After the spin spreading, the shield S is removed, and the uncured curable resin material c present in the vicinity of the edge of the recording medium 1 is spun out by high-rate rotation, while the resin is cured by UV irradiation. Thereby, the uniformity of the thickness of the transparent resin layer 11 in the vicinity of the edge of the recording medium 1 can be readily ensured. Alternatively, as is disclosed in Japanese Patent Application Laid-open No. 2002-237105, the uniformity of the thickness in the vicinity of the periphery can be ensured by preparation of a substrate having a large diameter, formation of a transparent resin layer, and then cutting work of the periphery.

After the resin film A, a plurality of transparent resin layers may be continuously formed. In detail, after the transparent resin layer, one or more additional transparent resin layers may be provided.

For example, a layer composed of a curable resin material c1 is applied and cured for a transparent resin layer and then a layer composed of a curable resin material c2 may be applied. Since the transparent resin layer of the curable resin material c1 ensures smooth coating, the resulting transparent resin layer can have a uniform thickness even if the curable resin material c2 is applied and cured.

An embodiment of forming the plurality of transparent resin layers on a Blu-ray Disc will now be described. A cover layer (first transparent resin layer) that is less warped and has a uniform optical thickness is provided on a recording medium on which a cap member is placed and a resin film A is formed. Before, the cap member and the resin film A are removed, a hard coat layer (second transparent resin layer) having a high hardness and a high antifouling property is provided on the cover layer. Alternatively, the hard coat layer may be formed after the cap member and the resin film A are removed.

Accordingly, a double-layer transparent resin layer having a uniform thickness and containing reduced number of bubbles can be formed. This process can be applied to formation of an intermediate layer that is provided between the two recording layers in a multilayer optical recording medium containing two or more recording layers.

[2-3. Removal of cap member]

After the transparent resin layer is formed, preferably, the transparent resin layer should be incised at the periphery of the cap member to be removed.

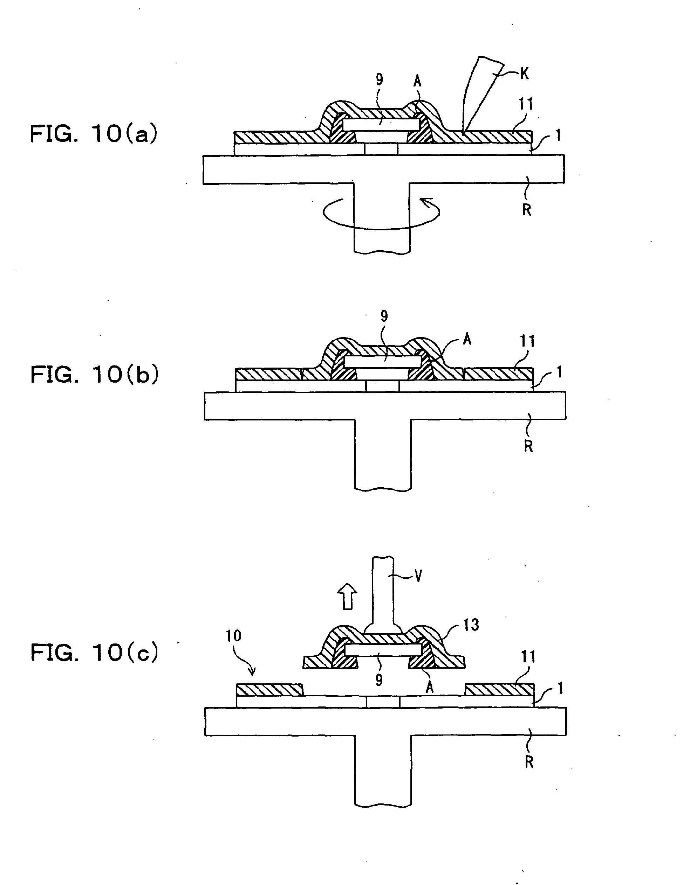

Figs. 10(a) to 10(c) illustrate a process to remove the cap member in the method of the present invention. In Figs. 10(a) to 10(c), components identical to those shown in Figs. 1 to 9 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted.

With reference to Fig. 10(a), the transparent resin layer 11 is incised on a circumference having a diameter slightly greater than the outer circumference of the resin film A with a knife K. With reference to Fig. 10(b), the turn table R is rotated to form a full circle of incision on the recording medium 1. With reference to Fig. 10(c), the cap member 9, the resin film A, and the transparent resin layer 13 inner than the incision are detached from the recording medium 1 with a removing means V.

The incision is provided using the knife K in Fig. 10(a). The present invention, however, is not limited to the use of the knife. In place of the mechanical means such as a knife, any optical means (hereinafter, may be referred to as "laser cutting") may be employed.

Laser cutting has the following advantages.
Cutting can be carried out more precisely with high reproducibility and processability using a commercially available laser trimming apparatus. Furthermore, heat generated during the laser cutting induces thermal welding of the transparent resin layer and the substrate, resulting in suppressing the separation of the transparent resin layer remaining outside the incision, namely, the transparent resin layer remaining on the recording medium, from the substrate.
In order to ensure these advantages, the irradiation conditions during the laser cutting preferably be determined such that the depth of the incision into the transparent resin layer is controlled to the following range.

The ratio of the depth of the incision into the transparent resin layer (hereinafter, referred to as simply "incision depth") to the thickness of the transparent resin layer is generally 0.5 or more, preferably 0.8 or more, and more preferably 1 or more. At a smaller incision depth, when the transparent resin layer is physically detached after the cutting operation, the transparent resin layer outside the incision may be simultaneously separated from the substrate. At an incision depth of more than 1, a perfect incision is formed in the transparent resin layer, so that the transparent resin layer outside the incision is not separated. According to scanning electron microscopy (SEM) of the transparent resin layer outside the incision at an incision depth of more than 1, thermal welding of the substrate and the transparent resin layer can be observed. This shows satisfactory adhesion.

Furthermore, the incision depth is generally 1.5 or less and preferably 1.2 or less. At a larger incision depth, damaging of and dusting from the substrate become noticeable to an extent causing defects.
When the incision depth is greater than 1, namely, when the incision reaches the substrate through the transparent resin layer, the incision depth is defined by the sum of the thickness of the transparent resin layer and the incision depth in the substrate.

A quite different process will be described. In this process, the curable resin material c in the vicinity of the periphery of the cap member is not cured during the curing operation of the curable resin material *c*, and the cap member and the resin film A are removed. When the curable resin material c is a photocurable resin, the cap member and the resin film A can be detached from the recording medium before light irradiation. Alternatively, by blocking a position in the vicinity of the resin film A from light irradiation with a photomask, the cap member and the resin film A can be detached after the major part of the transparent resin layer is cured. An embodiment of a process that remove the cap member and the resin film A using the photomask will be described below.

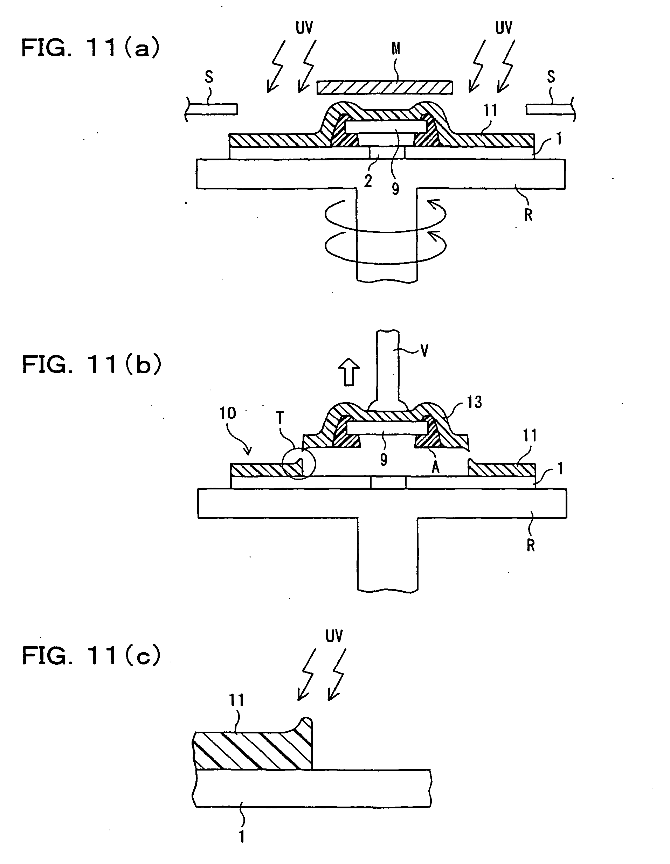

Fig. 11(a) is a schematic cross-sectional view illustrating a case in which the transparent resin layer is formed without curing the curable resin material c in the vicinity of the periphery of the cap member using the photomask; Fig. 11(b) is a schematic cross-sectional view illustrating removal of the cap member 9 and the curable resin material c; and Fig. 11(c) is a partially enlarged view of a region represented by alphabet T in Fig. 11(b). In Figs. 11(a) to 11(c), components identical to those shown in Figs. 1 to 10 are denoted by the same reference numerals. Furthermore, the substrate 3, the read/write functional layer 4 (the reflective layer 5, the dielectric layer 6, the recording layer 7, and the dielectric layer 8) of the recording medium 1 are not depicted. Fig. 11(a) corresponds to an embodiment using a photomask in Fig. 9(c).

With reference to Fig. 11(a), the photomask M inhibits curing of the curable resin material c on the cap member 9 and the resin film A and curable resin material c in the vicinity of the periphery of the cap member 9 during UV irradiation.

With reference to Fig. 11(b), the edge of the curable resin material c to be removed is viscous when the cap member 9, the resin film A, and the uncured curable resin material c are removed. Thus, the edge of the curable resin material c remaining on the recording medium readily rises (see alphabet T in the drawing).

With reference to Fig. 11(c), the protuberant portion is irradiated with UV rays for curing. The resulting transparent resin layer 11 protuberates at the inner periphery.

The advantages of such a process are shown below. The cap member and the resin film A can be readily detached by small force. Since the edge of the curable resin material c is flowable upon removal of the cap member and the resin film A, the edge of the curable resin material c remaining on the recording medium cannot be readily detached from the recording medium. In addition, the protuberance at the inner periphery of the transparent resin layer 11 can be used as substitution for the protrusion 12 in Fig. 8.

With reference to Fig. 10(c), the cap member 9, as well as the resin film A and the transparent resin layer 13 inner than the incision must be detached from the recording medium 1 (throughout the specification, the cap member 9, the resin film A, and the transparent resin layer 13 inner than the incision are collectively referred to as a "cut cap member"). Part of the "cut cap member" (in detail, part of the resin film A and the transparent resin layer) may be remain on the recording medium 1 (substrate) in some cases. Such part of the "cut cap member" remaining on the optical recording medium (more specifically, part of the resin film A) is referred to as remnant. It is preferred that such remnant be removed as much as possible or do not remain. Such requirement on the remnant also holds in Fig. 11(b).

Thus, it is preferred that adhesiveness between the cap member 9 and the resin film A be higher than that between the resin film A and the recording medium 1 (substrate). In general, wettability of the resin film A to the cap member 9 is enhanced when the surface tension of the cap member 9 is higher than that of the recording medium 1, resulting in an increase in adhesiveness.

The adhesiveness can be modified by control of the surface roughness of the cap member, in addition to the surface tension. For example, preferably, the maximum height (Ry), representing the surface roughness of the cap member should be in the range of 2 μm to 10 μm. Such roughness of the cap member surface improves adhesiveness between the resin film A and the cap member. Thus, the remnant of the resin film A does not remain on the optical recording medium (substrate) after the cap member and the resin film A are removed.

The maximum height (Ry) is a value defined by, for example, JIS B 0601 (1994) and JIS B 0031 (1994). In detail, a reference length is extracted along the average line from a roughness curve, and the distance between the summit line and the valley floor line at the extracted portion is measured in the longitudinal direction of the roughness curve. This distance represented in micrometer (μm) is the maximum height. When the maximum height (Ry) is determined, a reference height should be extracted from a portion without a flaw in which no extraordinarily high summit and deep valley floor are present.

In order to reduce the remnant after detachment, use of a soft cap member is effective. According to observation of the remnant by the inventors, cracks occurring in the resin film A and the transparent resin layer at the periphery of the cap member probably generate the remnant. Namely, if the cap member has high hardness, the external force applied during the detaching operation is probably concentrated to the periphery of the cap member. The inventors have discovered by intensive study that the formation of the cap member using the following materials can reduce the remnant during the detachment operation.

In the present invention, preferably, the cap member is formed of polyvinyl chloride. Alternatively, the cap member is formed of a material having a 100% modulus of generally 3 MPa or more, preferably 5 MPa or more and generally 30 MPa or less, preferably 20 MPa or less.

Herein, the term "100% modulus" represents a stress (tensile strength/cross-sectional area) required for elongation of a test piece of polyvinyl chloride to a twice length and can be measured according to JIS-K-6732. The 100% modulus is determined by a stress (tensile strength/cross-sectional area) required for elongation of a portion between markers on a test piece to a twice length in a tensile test at an intermarker distance of an unstretched sample of 40 mm and a tensile rate of 200 mm/min.

A cap member formed of polyvinyl chloride having a 100% modulus below this range is unsuitable for transportation due to deformation by its own weight and cannot maintain the positional precision when being placed on the recording medium, while a cap member formed of polyvinyl chloride having a 100% modulus above this range tends to generate remnant after the detachment operation as described above. In contrast, a cap member formed of polyvinyl chloride having a 100% modulus within the range can maintain high transportability and high positional precision, as well as suppressed remnant after the detachment operation.

If the cap member is formed of any material other than polyvinyl chloride, the strength and hardness of the material can be selected according to this standard.

[3. Apparatus for making optical recording medium]

The apparatus for making an optical recording medium of the present invention includes means (hereinafter, referred to as "cap member-placing unit") for placing a disk cap member on a recording medium including a circular substrate having a central hole so as to close the central hole, the diameter of the disk cap member being equal to or greater than that of the central hole; means (hereinafter, referred to as "resin material supplying unit") for supplying a liquid resin material a that covers a step formed by the cap member and the recording medium; means (hereinafter, referred to as "resin material curing unit") for curing the resin material a to form a resin film A; means (hereinafter, referred to as "curable resin material supplying unit") for supplying a curable resin material c for forming a resin layer on the cap member; means (hereinafter, referred to as "curable resin material spin-spreading unit") for rotating the recording medium to spin-spread the curable resin material c; and means (hereinafter, referred to as "curable resin material curing unit") for curing the curable resin material c.

The apparatus for making the optical recording medium of the present invention should include these means, and may further include other means, if necessary.

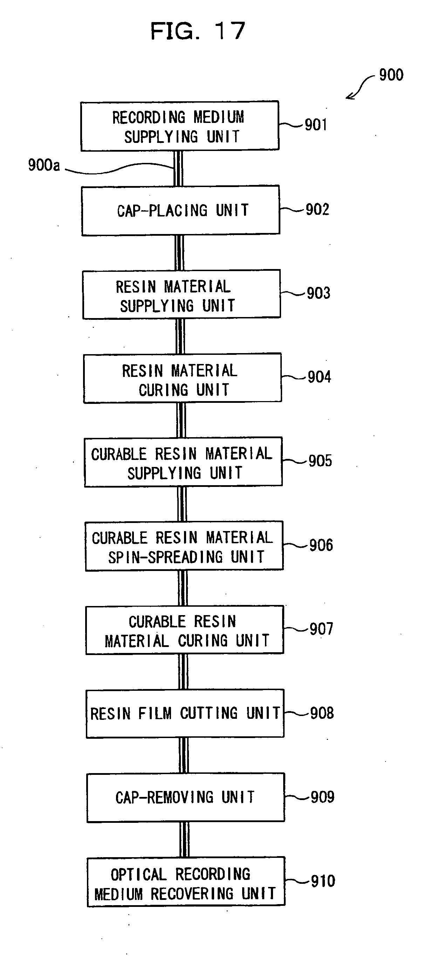

Fig. 17 is a functional block diagram illustrating a basic configuration of an apparatus for making an optical recording medium according to an embodiment of the present invention. The apparatus 900 for making the optical recording medium shown in Fig. 17 includes a recording medium supplying unit 901, a cap member-placing unit 902, a resin material supplying unit 903, a resin material curing unit 904, a curable resin material supplying unit 905, a curable resin material spin-spreading unit 906, a curable resin material curing unit 907, a resin film cutting unit 908, a cap member-removing unit 909, an optical recording medium recovering unit 910, and a conveying means 900a that connects these functional units.

The recording medium supplying unit 901 supplies a recording medium on which a resin layer is to be formed. The optical recording medium recovering unit 910 recovers the optical recording medium provided with the resin layer. The conveying means 900a connects the recording medium supplying unit 901 with the optical recording medium recovering unit 910. The other functional units 902 to 909 are disposed along the conveying means 900a. While the recording medium supplied by the recording medium supplying unit 901 is conveyed by the conveying means 900a, a resin layer (transparent resin layer) is formed on the recording medium by the functional units 902 to 909 to form an optical recording medium. The resulting optical recording medium is conveyed to optical recording medium recovering unit 910 by the conveying means 900a and is finally recovered thereat.

More specifically, the conveying means 900a may be conventional conveying means, for example, a known pick and place. In this case, the conveying start and end of the conveying means 900a may be the recording medium supplying unit 901 and the optical recording medium recovering unit 910, respectively.

The cap member-placing unit 902 places a disk cap member on the recording medium so as to close the central hole in which the cap member has an diameter that is equal to or greater than the diameter of the central hole of the recording medium. The detail such as the material and shape of the cap member and the method of placing of the cap member on the recording medium is explained above in [2. Preparation of transparent resin layer]. The cap member-placing unit 902 may be, for example, a conventional robot arm.

The resin material supplying unit 903 supplies a liquid resin material a so as to cover the step between the cap member placed by the cap member-placing unit 902 and the recording medium. The type of the liquid resin material and the method for supplying the material on the recording medium are explained in detail above in [2. Preparation of transparent resin layer]. The resin material supplying unit 903 may be, for example, a conventional dispenser for resin material. A resin material is circularly applied on the recording medium provided with the cap member through the dispenser using a known X-Y stage so as to cover the step of the cap member. Alternatively, it may be circularly applied using a rotation means such as a known motor.

The resin material curing unit 904 cures the resin material a supplied by the resin material supplying unit 903 to form a resin film A. The method for curing the resin material a may be appropriately selected depending on the type of the resin material a. The details thereof are explained above in [2. Preparation of transparent resin layer]. The resin material curing unit 904 may be, for example, a UV light source for a UV-curable resin as the resin material a or a heater for a thermally curable resin as the resin material a.

The curable resin material supplying unit 905 supplies a curable resin material c for forming the resin layer on the cap member after the curing of the resin material *a* (the formation of the resin film A) by the resin material curing unit 904. The detail of the type of the curable resin material c for forming the resin layer and the method for supplying of the curable resin material c on the cap member are explained above in [2. Preparation of transparent resin layer]. The curable resin material supplying unit 905 may be, for example, a conventional dispenser for resin material. The curable material c is stocked in a supply reservoir, and is supplied from the reservoir to a dispenser by compressed air through a tube. Then, a curable resin material c for forming the resin layer is applied to the cap member through the dispenser.

The curable resin material spin-spreading unit 906 spin-spreads the curable resin material c supplied from the curable resin material supplying unit 905 by rotating the recording medium. The method for rotating the recording medium and the conditions for spreading the curable resin material are explained in detail in [2. Preparation of transparent resin layer] above. The curable resin material spin-spreading unit 906 may be a conventional rotating means such as a motor. The curable resin material spin-spreading unit 906 and the curable resin material supplying unit 905 may be integrated. For example, a recording medium provided with a cap member and a resin film A is directly transferred to the curable resin material spin-spreading unit 906, and a resin film c is applied on the cap member through a dispenser and is spin-spread with a motor.

Using a curable resin material spin-spreading unit 906 provided with a heater and a UV light source, curing with spin spreading facilitates control of the thickness as described above in [2. Preparation of transparent resin layer].

The curable resin material curing unit 907 forms a resin layer by curing the curable resin material c spin-spread by the curable resin material spin-spreading unit 906. The method for curing the curable resin material may be appropriately selected depending on the type of the curable resin material c. The detail is explained above in [2. Preparation of transparent resin layer]. The curable resin material curing unit 907 may be a UV irradiation means for a UV-curable resin as the curable resin material c or a heating means such as a heater for a thermally curable resin as the curable resin material c.

The resin film cutting unit 908 forms an incision into the resin layer on the recording medium outside the periphery of the cap member after the curing of the curable resin material c (formation of the resin layer) by the curable resin material curing unit 907. The detail of the method and conditions for forming the incision in the resin film are explained above in [2. Preparation of transparent resin layer]. The resin film cutting unit 908 may be a combination of a mechanical cutting means such as a knife or an optical curing means such as laser with a driving means such as a motor.

The cap member-removing unit 909 removes the resin layer at the inner side of the incision formed by the resin film cutting unit 908. The details of the method and conditions for removing the resin layer are explained above in [2. Preparation of transparent resin layer]. The cap member-removing unit 909 may be, for example, a sucking and driving means that holds the entire recording medium and sucks the cap member at the inner side of the incision to move it upwardly.

In order to ensure normal operations of these functional units 901 to 910 described above, a positioning means that determine the positions of the recording medium and the optical recording medium may appropriately be provided on the conveying means 900a.

The apparatus 900 for making the optical recording medium is described above. The apparatus 900 for making the optical recording medium can be modified within the scope of the present invention.

For example, in Fig. 17, the functional units 901 to 910 are connected by the conveying means 900a. However, the operations of these functional units 901 to 910 need not to be carried out at different places of the conveying means 900a. Instead, operations by two or more functional units may be applied to the recording medium or the optical recording medium at a single place of the conveying means 900a.

Among the functional units 901 to 910, any unit other than the functional units 902 to 907 can be omitted. For example, the functional units 908 and 909 can be omitted for an apparatus that is used to carry out the process for forming the resin film without cutting the resin film and removing the cap member and the preceding processes.

[Examples]

The present invention will now be described in further detail with reference to Examples. The scope of the present invention, however, is not limited only to those described Examples.

[Example 1]

[Production of recording medium]

A polycarbonate substrate with a diameter of 120 mm and a thickness of 1.1 mm was used. The substrate had a central hole with a diameter of 15 mm. The substrate had a spiral groove with a depth of 20 nm and a width of 0.16 $\mu$m at a track pitch of 0.32 $\mu$m.

On the substrate, a reflective layer (AgNdCu alloy: 100 nm), a dielectric layer (composed of a 7 nm GeCrN layer and a 2 nm ZnS/SiO$_2$ layer in this order), a recording layer (InGeSbTe alloy: 14 nm), and a dielectric layer (composed of a 5 nm GeCrN layer and a 31 nm ZnS/SiO$_2$ layer in this order) were deposited in sequence. Each layer was formed by sputtering. An inner mask used in the sputtering system had a diameter of 36.0 mm. Thus, the polycarbonate substrate was not processed at the inner side of a position that is 36.0 mm distant from the center of the recording medium.

[Formation of transparent resin layer]

An acrylic photocurable resin material with a viscosity of 620m Pa·s was used as a resin material *a*. A commercially available general-purpose vinyl chloride (frosted vinyl chloride, thickness: 0.2 mm) was punched with a Thomson blade with a diameter of 20 mm to produce a cap member.

A urethane-acrylate photocurable resin with a viscosity of 3000 mPa·s (made by MITSUBISHI RAYON CO., LTD.) was used as a curable resin material c.

The viscosity was measured at normal temperature and normal pressure using a rotary viscometer made by Brookfield.

The recording medium was placed on a spin coater, and the resin material a was circularly dispensed on a position that was 20.5 mm distant from the center of the substrate under the conditions shown in Table 1 through a stainless steel (SUS) nozzle with a bore of 19G made by Musashi Engineering, Inc. (See Fig. 5(a)).

[Table 1]

Table 1 Coating conditions of resin material a

| Dispense pressure | 0.035 MPa |
|---|---|
| Rotation rate | 30 rpm |
| Number of rotations | 1 turn (dispense time: 2 seconds) |
| Dispense Weight | 33 mg |

Afterward, using a pen-shaped vacuum picker, the cap member was rapidly placed so as to close the central hole of the recording medium. The cap member was manually pressed onto the recording medium through the vacuum picker so as to cover the periphery of the cap member provided with the resin material *a* and to adopt the resin material *a* to the cap member (see Fig. 5(b)).

Using a spot curing type UV lamp (Toscure 100 made by HARISON TOSHIBA LIGHTING Corp.) the resin material a was cured to form a resin film A (see Fig. 5(c)). Using a stopwatch, the time from the end of the application of the resin material a to the start of the curing by the spot cure type UV lamp was controlled to be 30 seconds.

The recording medium provided with the cap member was placed on the spin coater again. The resin material c was dispensed on the center of the recording medium (on the cap member) through a stainless steel (SUS) nozzle with a bore of 14G (made by Musashi Engineering, Inc.). The dispense conditions are as follows:

The curable resin material c was dispensed for 8 seconds substantially on the center of the recording medium (on the cap member) rotating at 80 rpm under a dispense pressure of 0.2 MPa ($N_2$ pressure).

The number of rotations was increased to 1280 rpm by spending 7 seconds, and was held at this number of rotations for 5 seconds. For last 2 seconds of the 5 seconds, the entire recording medium was irradiated with UV rays with an illumination intensity of 10 mw/cm$^2$ to cure the curable resin material c during the rotation. A width of about 0.5 mm from the periphery of the recording medium was covered with a mask so that this region was not irradiated with UV rays.

After UV irradiation, the recording medium was rotated at 5000 rpm for 2 seconds to spin out the uncured resin remaining on the periphery. This step improved the appearance of the periphery of the recording medium.

After the rotation, the recording medium was irradiated with UV rays an illumination intensity of 80 mw/cm$^2$ up to an accumulated luminous energy of 1 J/cm$^2$. Before this operation, the mask was removed to cure the resin in the vicinity of the periphery of the recording medium.

Next, a knife blade was dug into the transparent resin layer at a position that was 22.5 mm from the center of the recording medium (see Fig. 10(a)). The recording medium was rotate to form an incision in the transparent resin layer (see Fig. 10(b)). The cap member at the inner position, the resin film A, and the inner portion of the transparent resin layer at the inner portion of the incision were detached from the recording medium (See Fig. 10(c)).

The resulting optical recording medium was visually observed in a fluorescent light. Consequently, no bubble was observed in the transparent resin layer. The remnant of the transparent resin layer and the resin film A was substantially not found at the position on the substrate from which the resin film A and the cap member were detached. Herein, the remnant represents remnant of 2 mm$^2$ or more. The thickness of the transparent resin layer was measured. As shown in Table 2, the thickness was uniform. The average thickness is substantially identical to the intended thickness (100 $\mu$m).

[Table 2]

Table 2 Thickness of transparent resin layer in Example 1

| Radius | 25 mm | 35 mm | 45 mm | 55 mm |
|---|---|---|---|---|
| Maximum | 99.2 | 99.4 | 100.0 | 99.9 |
| Average | 99.1 | 99.2 | 99.8 | 99.5 |
| Minimum | 98.8 | 99.0 | 99.4 | 99.0 |

[Examples 2 and 3 and Comparative Examples 1 and 2]

Optical recording media were produced as in Example 1 except for the conditions for forming the resin film A.

Table 3 shows the production conditions and the state of the transparent resin layer. In Examples 2 and 3 and Comparative Example 1, the dispense weight of the resin material *a* was controlled to vary the shape of resin film A.

Examples 2 and 3, the resin film A formed had satisfactory shapes, the transparent resin layer had a uniform thickness distribution, and no bubble defect was observed. In contrast, in Comparative Example 1, the weight of the resin material a was too low to cover the step between the cap member and the substrate entirely. As a result, many striated defects (abnormal thickness) were observed on the transparent resin layer. This phenomenon is probably affected by burrs of the cap member.

The striated defects represent steps of mainly linear irregularities (5 mm or longer) that are radially generated during spin spreading. These striated defects were limited to visually observed ones. The striated defects are probably induced by microirregularities (about 50 $\mu$m or more) on the underlying substrate. The striated defects may have a spiral shape depending on the spin spreading conditions and the state of the underlying substrate. Alternatively, the striated defects may be bent at a midway of radial lines depending on the spin spreading conditions and the state of the underlying substrate. As described above, the striated defects can be various shapes.

Although the width and the depth of the irregularities cannot be defined well, a width of 50 $\mu$m or less and a depth of 5 $\mu$m or less will not cause practical problems.

In Comparative Example 2, the resin film a was not irradiated with light during the process for forming the resin film A and thus was not cured. Other conditions were the same as that in Examples.

In Comparative Example 2, the film thickness distribution was uniform, but many bubbling defects were observed in all five samples.

[Table 3]

Table 3 Examples 1, 2, and 3, and Comparative Examples 1 and 2

| | | Example 1 | Example 2 | Example 3 | Comparative Example 1 | Comparative Example 2 |
|---|---|---|---|---|---|---|
| Cap member | Material | Vinyl chloride (frosted) | | | | |
| | Diameter (mm) | 20 | | | | |
| | Thickness X (mm) | 0.2 | | | | |
| Resin material a | Dispense pressure (MPa) | 0.036 | 0.06 | 0.1 | 0.015 | 0.036 |
| | Number of rotations (rpm) | 30 | | | | |
| | Dispensing time (sec) | 2 | | | | |
| | Dispensed weight (mg) | 32 | 69 | 127 | 5 | 32 |
| Shape of resin film A | y (mm) | 0.025 (0.13X) | 0.075 (0.38X) | 0.200 (1.0X) | Not defined | Not defined |
| | z (mm) | 1.0 (5X) | 1.0 (5X) | 1.0 (5X) | Not defined | Not defined |
| Transparent resin layer | Thickness distribution | Uniform | Uniform | Uniform | Many striated defects | Uniform |
| | Visually observed bubbles | 0/3 (Not found in 3 samples) | 0/3 (Not found in 3 samples) | 0/3 (Not found in 3 samples) | 3/3 (many bubbling defects in 3 samples) | 5/5 (many bubbling defects in 3 samples) |

[Examples 4 to 10]

Optical recording media were produced as in Example 1 except that the material for and the shape of the cap member and the conditions for forming the resin film A were varied. Table 4 shows the production conditions and the state of the transparent resin layer.

[Table 4]

Table 4 Examples 4 to 10

| | | Example 4 | Example 5 | Example 6 | Example 7 | Example 8 | Example 9 | Example 10 |
|---|---|---|---|---|---|---|---|---|
| Cap member | Material | Vinyl chloride (frosted) | | | Stainless steel | Vinyl chloride (frosted) | PET | PE |
| | Diameter (mm) | 20 | 20 | 20 | 20 | 17 | 20 | 20 |
| | Thickness x (mm) | 0.1 | 0.3 | 0.5 | 0.2 | 0.2 | 0.2 | 0.2 |
| Resin material a | Dispense pressure (MPa) | 0.036 | | | | | | |
| | Number of rotations (rpm) | 30 | | | | | | |
| | Dispensing time (sec) | 2 | | | | | | |
| | Dispsensed weight (mg) | 32 | 33 | 32 | 32 | 32 | 32 | 32 |
| Shape of resin film A | Y(mm) | 0.035 (0.35X) | 0.020 (0.07X) | 0.005 (0.01X) | 0.020 (0.10X) | 0.000 (0.00X) | 0.025 (0.13X) | 0.030 (0.15X) |
| | Z (mm) | 1.0 (10X) | 1.0 (3.3X) | 1.0 (2X) | 1.0 (5X) | 1.2 (6X) | 1.0 (5X) | 1.0 (5X) |
| Transparent resin layer | Thickness distribution | Uniform | Uniform | Slight striated defect | Uniform | Uniform | Uniform | Uniform |
| | Visually observed bubbles | 0/1 (None) | 0/1 (None) | 0/1 (None) | 0/1 (None) | 2/3 (slight bubbles) | 0/1 (None) | 0/1 (None) |

In Example 6, the shape of the resin film A slightly got distorted in the circumferential direction. Thus, striated defects were observed on the transparent resin layer. This phenomenon was probably caused by a slightly thick cap member. The thickness at the striated defects was within $\pm 2 \mu m$ relative to the average thickness 98 $\mu m$ of the transparent resin layer. Thus, this transparent resin layer will have a practical use.

In Example 7, the resin material a was not cured under the stainless steel cap member, and remnant was observed at the site from which the resin film A and the cap member were detached. Occurrence of such remnant will be prevented by modifying the light irradiation process for the resin film A.

In Example 8, a slight bump (10 $\mu m$) was observed on the substrate of the recording medium at a position 22.0 mm distant from the center. This bump was formed by the stamper holder during the formation of the substrate. According to microscopy in the circumferential direction, a small number of microbubbles were observed in transparent resin layer in the vicinity of the bump, although these were not able to be visually confirmed. The bump probably induced the occurrence of bubbles. The transparent resin layer, however, had a uniform thickness distribution. These bubbles are expected to disappear if the cap member and the resin film A are formed so as to cover the bump.

[Examples 11 to 13]

In order to enhance the advantages of the present invention, it is preferred tat the angle defined by the outmost circumference of the resin film A and the substrate (peripheral angle) be 30° or less, as described above. Thus, Examples 11 to 13 were carried out in order to confirm that the control of the peripheral angle of the resin film A, in addition to the coverage of the bump, can suppress bubbling.

In Examples 11 to 13, optical recording media were produced as in Example 1 except that the peripheral angle of the resin film A was varied. The production conditions and the evaluated results of the optical recording medium in Examples 11 to 13 are shown in Table 5.

Example 11 shows a result of a case in which the resin material a is applied from a fixed dispense position in order to cover the step between the cap member and the recording medium since the contact angle between the resin film A and the recording medium is high, seven samples among ten samples traps bubbles at this position during the spreading operation of the uncured resin for the transparent resin layer.

In Example 12, the dispense position of the resin material a was shifted in parallel to reduce the dispensed weight and thus to reduce the peripheral angle of the resin film A for the purpose of a decrease in contact angle compared with Example 11. Bubbling was suppressed.

In Examples 11 and 12, the resin film A is formed so as to cover not only the step between the cap member and the recording medium but also the bump formed on the recording medium by the stamper holder so that bubbling caused by these bump/step was suppressed.

In Example 13, only the step between the cap member and the recording medium was covered by the resin film A. For the bump formed on the recording medium by the stamper holder, a resin film B physically separated from the resin film A was formed to moderate the affect of the step/bump and to further reduce the peripheral angles of the resin film A and resin film B. No bubbling was observed under such a condition.

[Table 5]

Table 5 Examples 11 to 13

| | | Example 11 | Example 12 | Example 13 |
|---|---|---|---|---|
| Cap member | Material | Vinyl chloride (frosted) | | |
| | Diameter (mm) | 18 | | |
| | Thickness (mm) | 0.2 | | |
| Resin film A | Angle at periphery (deg.) | 30-34 | 18-28 | 16-24 |
| Resin film B | Angle at periphery (deg.) | Nothing | Nothing | 5-10 |
| Transparent resin film | Viscosity (mPa·s) | 2700 | | |
| | Visually observed bubbles (Ratio of NG) | 7/10 | 2/10 | 0/10 |

[Examples 14 to 17]

Optical recording media were produced as in Example 1 except that the material for the cap member and the frosting conditions were modified. Table 6 shows production conditions and the state of the transparent resin layer. Table 6 also shows the results of the remnant observed at a site from which the resin film A and the cap member were detached.

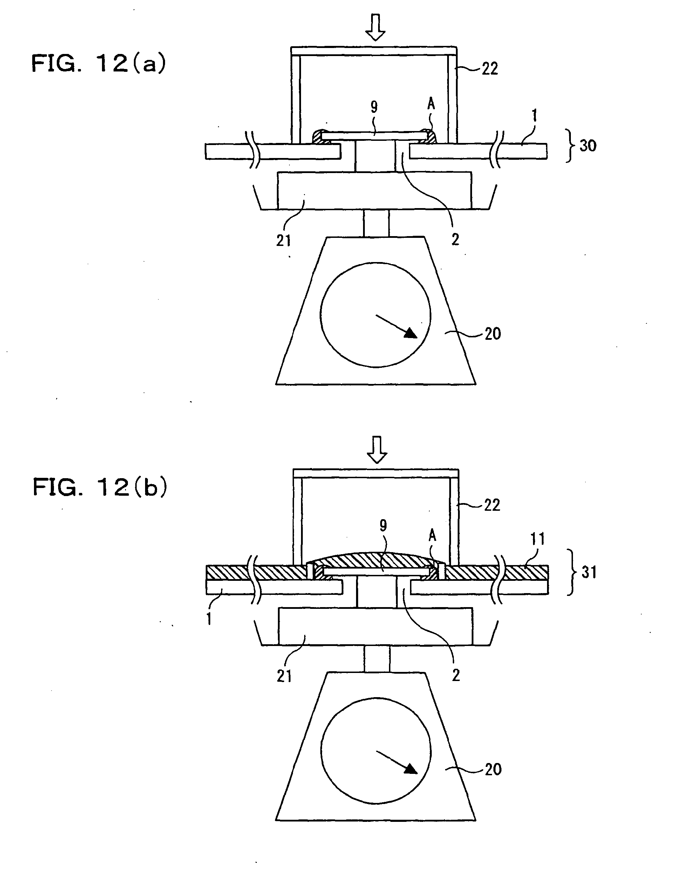

Figs. 12(a) and 12(b) illustrate a process for measuring the remnant in Examples 14 to 17.

With reference to Fig. 12(a), an intermediate 30 in which a cap member was placed on a recording medium (substrate) and a resin film A was formed was prepared. The resin film A was produced as in Example 1. A stainless steel support 21 with a cylindrical tip (13 mm ∅) that was slightly smaller than the central hole of the substrate was placed on a platform balance 20 (Maximum scale 12 kg), and the intermediate 30 was placed on the resin film such that the edge of the support 21 did not come into contact with the side of the central hole 2 of the intermediate 30. The edge of the support 21 was placed so as to be substantially parallel to the cap member 9. Furthermore, a hollow plastic cylindrical jig 22 having a diameter of 25 mm that was larger than that of the resin film A was placed thereon. The cylinder had a thickness of 1 mm and a height of 30 mm at the edge. The support 21, the intermediate 30, and the jig 22 were disposed in a balanced manner, and the scale of the platform balance was recorded (before loading).

An increasing load was gradually added to the jig 22 until adhesion of the resin film A was broken. The difference between the load when the adhesion was broken (after loading) and the load before loading was a measure of the adhesion of the resin film A. The platform balance 20 used had a pick-hold functions.

The remnant of the resin film A was visually observed.

Instead of the intermediate 30, an intermediate 31 was used. The intermediate 31 is composed of the intermediate 30 and a transparent resin layer 11 provided thereon. Furthermore, using a knife, an circular incision was formed in the intermediate 31, in which the incision had a diameter greater than the diameter (22 mm) of the resin film A but smaller than the diameter (25 mm) of the jig 22, and a depth that passed through the transparent resin layer 11 and slightly broke the substrate. Other components arranged were identical to those in Fig. 12(a), as shown in Fig. 12(b). A load was added as in Fig. 12(a) to estimate the adhesion and to observe the remnant of the resin film A and the transparent resin layer.

In Example 14, intermediates 30 and 31 were produced as in Example 1 except that the diameter of the cap member was modified and the incision with a diameter of 24 mm was provided. For each sample, the adhesion was measured and the remnant was observed by the process shown in Figs. 12(a) and 12(b), respectively. The results are shown in Table 6. In Example 14, the intermediate 30 had an appropriate adhesive force of 3 kgf (about 29.4 N), and the intermediate 30 was able to be moved without trouble by holding the cap member of the intermediate 30 using a vacuum picker. No remnant was observed after the adhesion test. The sample had desirable properties in practice. The adhesive force of the intermediate 31 was further enhanced to 12 kgf (about 117.6 N). No remnant was observed after the test.

In Example 15, intermediates 30 and 31 were produced as in Example 14 except that the diameter of the cap member was decreased whereas the thickness of the cap member was increased to enhance the rigidity of the cap member. The results are shown in Table 6. Compared with Example 14, the adhesive force (load required for detachment) was increased and no remnant was observed.

In Example 16, intermediates 30 and 31 were produced as in Example 14 except that the cap member was made of a material having a small surface tension (polypropylene: PP) and the diameter of the cap member was reduced. The results are shown in Table 6. Compared with Example 14, the adhesive force (load required for detachment) was decreased. This decrease in adhesive force, however, did not impair conveying and was able to operate the cap member and the recording medium satisfactorily with the vacuum picker.

The uncured curable resin a had a surface tension of about 38 mN/m. The substrate had a surface tension of about 37.5 mN/m and had a surface roughness Ry of less than 0.1 $\mu$m.

In Example 17, a PET film (surface roughness Ry: less than 0.1 $\mu$m, thickness 0.2 mm) having a surface tension that was equal to or larger than that of the cap member used in Example 14 was punched with a Thomson blade to form a cap member with a diameter of 20 mm. Except these, intermediates 30 and 31 were produced as in Example 14. The results are shown in Table 6. The adhesiveness of the cap member and the remnant were substantially identical to those in Example 16.

In the transparent resin layers in Examples 14 to 17, bubbles, acne, and striated defects were not observed and the film thickness was uniform. The difference in remnant is probably caused by the following mechanism.

In Example 16, the cap member used has a smaller surface tension and a smaller surface roughness compared with Examples 14 and 15. As a result, the adhesive force between the cap member and the resin film A is decreased and this causes occurrence of the remnant. In Example 17, the cap member used has a significantly smaller surface roughness compared with Examples 14 and 15 although the surface tension is substantially the same. As a result, the adhesive force between the cap member and the resin film A is decreased and this causes occurrence of the remnant.

In view of punching, weak adhesiveness rather than strong adhesiveness is preferred. The adhesiveness can be controlled by modification of the surface roughness and rigidity of the cap member.

[Table 6]

Table 6 Examples 14 to 17

| | | Example 14 | Example 15 | Example 16 | Example 17 |
|---|---|---|---|---|---|
| Cap member | Material | Vinyl chloride | | PP | PET |
| | Surface tension (mN/m) | 39 | 41.9 | 29 | 43 |
| | Surface roughness Ry ($\mu$m) | 4 | | 1 | <0.1 |
| | Diameter (mm) | 23.1 | 20 | 20 | 20 |
| | Thickness (mm) | 0.2 | 0.3 | 0.2 | 0.2 |
| Adhesiveness of intermediate 30 | Load required for detachment (kgf) | 3 | 12 | 0.5 | 0.5 |
| | Remnant | Not found | Not found | Found | Found |
| Adhesiveness of intermediate 31 | Load required for detachment (kgf) | 12 | >12 | 5 | 5.5 |
| | Remnant | Not found | Not found | Found | Found |

[Examples 18 to 21]

In Examples 18 to 21, optical recording media were produced as in Examples 14 to 17 except that the material for the cap member was varied. As in Examples 14 to 17, the load required for detachment of the resin film A and the cap member was measured and the remnant on a site after the detachment was observed according to the method shown in Figs. 12(a) and 12(b). The resin film A was more precisely observed with eyes and a microscope to detect remant of 1 mm$^2$ or more. Before the detachment, the circular incision was made by laser light.

The results of mechanical properties of the cap member material, the load, the remant observation in Examples 18 to 21 are shown in Table 7. The 100% modulus of the cap member material was measured according to JIS-K-6732, which is described in [2. Preparation of transparent resin layer] of [Best Mode for Carrying Out the Invention].

In Example 18, the hard vinyl chloride plate used in Examples 14 and 15 was used as a cap member. In Example 18, the adhesive force of the intermediate 31 significantly varies from 5.5 kgf to 12 kgf (about 117.6N) or more. The remant after the test was observed. Although high adhesiveness was also observed in Examples 14 and 15, the remant was observed only in this example. Possible reasons for this difference are as follows. Smaller remants were objects of observation in this example, and cutting by laser light improved the adhesiveness between the transparent resin film and the recording medium (substrate) by welding.

In Examples 19 to 21, the cap member was made of a soft material to reduce the remant in Example 18. The use of the soft cap member improves the adhesion of the resin film A to be removed to the cap member and prevents stress concentration during the detachment operation. Compared with Example 18, occurrence of the remnant is significantly reduced.

[Table 7]

Table 7 Examples 18 to 21

| | | Example 18 | Example 19 | Example 20 | Example 21 |
|---|---|---|---|---|---|
| Cap member | Material | Vinyl chloride | | | |
| | 100% modulus (MPa) | ∞ (Hard vinyl chloride) | 16.7 | 13.9 | 10.2 |
| | Diameter (mm) | 18 | | | |
| | Thickness (mm) | 0.2 | | | |
| Adhesiveness of intermediate 31 | Load required for detachment (kgf) | 5.5 to 12.0 or more | 4.0 to 7.0 | 5.0 to 6.7 | 4.5 to 5.7 |
| | Remnant (NG ratio) | 12/20 | 3/20 | 0/20 | 0/20 |

· 100 modulus: a stress required for elongation of a test piece to a twice length (tensile strength/corss-sectional area) Measured according to JIS-K-6732 at a intermarker distance of an unstretched sample of 40 mm and a tensile rate of 200 mm/min.
· Remnant was observed in more detail than the case shown in Table 6.

[Examples 22 to 27]

In Examples 22 to 27, optical recording media were produced as in Example 1. The center of the transparent resin layer of each optical recording medium was circularly cut by laser light under various laser irradiation conditions and incision depths. The separation between the transparent resin layer and the substrate outside of the incision after the cutting and the amount of dust generated during the cutting were measured to evaluate the correlation to the laser irradiation condition and the incision depth.

The laser irradiation condition, the incision depth, the separation of the transparent resin layer after the cutting, and the amount of dust during the cutting in Examples 22 to 27 are shown in Table 8.

Example 22 shows the results at an incision depth of about 70%. Since the transparent resin layer was not sufficiently cut, the transparent resin layer outside of the incision was stretched by the substrate and thus was separated.

Example 23 shows the results at an incision depth of about 90%. Since the transparent resin layer was almost cut, the separation was slight.

Example 24 shows the results at an incision depth of about 100%. The incision reached the surface of the substrate and no separation was observed. The interface between the substrate and the transparent resin layer at the incision was observed with an SEM. The substrate resin (polycarbonate) was melted and the transparent resin layer and the surface of the substrate were welded. This shows an improvement in adhesiveness between the transparent resin layer and the substrate.

Examples 25 to 27 show the results at an incision depth exceeding 100% (120%, 160%, and 220%, respectively). Since the transparent resin layer is completely cut, no separation of the transparent resin layer was observed outside of the incision. However, in Examples 26 and 27, dust probably caused by the laser-cut substrate was observed. Since this dust may contaminate the entire optical recording medium, preferably the incision by laser cutting is not excessively deep.

[Table 8]

Table 8 Examples 22 to 27

|  |  | Example 22 | Example 23 | Example 24 | Example 25 | Example 26 | Example 27 |
|---|---|---|---|---|---|---|---|
| Laser irradiation conditions | Scan speed (mm/s) | 500 | 500 | 400 | 300 | 200 | 100 |
|  | Laser power (%) | 70 | 90 | 90 | 90 | 90 | 90 |
| Incision depth | In transparent resin layer ($\mu$m) | 70 | 90 | 100 | 100 | 100 | 100 |
|  | In substrate ($\mu$m) | 0 | 0 | 0 | 20 | 60 | 120 |
|  | Total (rate to the transparent resin layer thickness) | 70% | 90% | 100% | 120% | 160% | 220% |
| State of cutting | Separation of transparent resin layer (ratio) | 10/10 | 2/10 | 0/10 | 0/10 | 0/10 | 0/10 |
|  | Dust by cutting | Not found | Not found | Not found | Not found | Found | Found |

[Comparative Example 3]

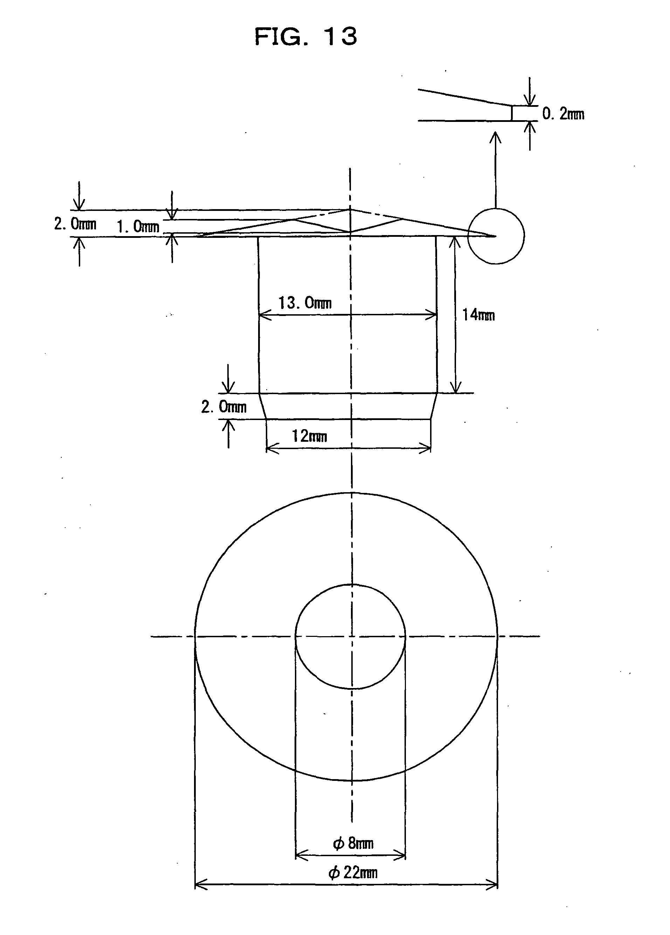

Coating was carried out as in Example 1 except that a stainless steel center cap member with a diameter of 22 mm shown in Fig. 13 was placed on the substrate by holding a vacuum holder. In other words, in this experiment, the resin film A was not formed with the resin material *a*.

The transparent resin layer had a uniform thickness distribution. However, many bubbles were visually observed. Bubbling patterns were similar in five optical recording media. Microscopic observation showed that the bubbles were generated in the vicinity of the periphery of the cap member.

The center cap member was detached. The transparent resin layer was separated at the periphery of the center cap member and many remnants remained on the substrate. This was caused by the uncured curable resin material *c* flowing into a gap below the center cap member. The remnants were removed with absorbent gauze.

Industrial Applicability

The method for making an optical recording medium in accordance with the present invention can be suitably applicable in various optical recording media such as CDs, DVDs, and BDs.

This application is based on Japanese patent application Nos. 2005-204430 filed on July 13, 2005 and 2006-191165 filed on July 12, 2006.

**Claims**

1.  A method for making an optical recording medium (10, 10', 10") comprising: placing a disk cap member (9, 105) on a recording medium (1, 1', 101) comprising a circular substrate (3, 3', 103) having a central hole (2, 102) so as to close the central hole wherein the outer diameter of the disk cap member is equal to or greater than that of the central hole and supplying a liquid resin material a so as to cover a step between the disk cap member and the recording medium;
    curing the resin material a to form a resin film A; supplying a curable resin material c for forming a resin layer on the cap member;
    rotating the recording medium to spin-spread the curable resin material c; and
    curing the curable resin material c during or after the spin spreading to form the resin layer on the recording medium.

2.  The method for making an optical recording medium of claim 1, wherein the resin layer is a transparent resin layer (11, 106).

3.  The method for making an optical recording medium of claim 1 or 2, wherein the diameter of the cap member is greater than the diameter of the central hole.

4.  The method for making an optical recording medium of any one of claims 1 to 3, wherein the resin material a is a photocurable resin material.

5.  The method for making an optical recording medium of any one of claims 1 to 4, wherein the resin material a has a viscosity in the range of 30 mPa·s to 5000 mPa·s.

6.  The method for making an optical recording medium of any one of claims 1 to 5, wherein the resin material a is circularly applied to a position on the recording medium, the position corresponding to the diameter of the cap member; the cap member is placed so as to be pressed on the resin material a; and the resin material a is cured to form the resin film A.

7.  The method for making an optical recording medium of any one of claims 1 to 5, wherein the cap member is adhered to the recording medium, the resin material a is circularly applied to a position corresponding to the outer diameter of the cap member, and the resin material a is cured to form the resin film A.

8.  The method for making an optical recording medium of claim 7, wherein the cap member is adhered to the recording medium with a curable or tacky adhesive.

9.  The method for making an optical recording medium of claim 8, wherein the curable adhesive is a photocurable resin having a viscosity in the range of 30 mPa·s to 5000 mPa·s.

10. The method for making an optical recording medium of any one of claims 1 to 5, wherein the resin material a is circularly applied at a position on the recording medium, the position corresponding to an outer side of the outer diameter of the cap member, and the resin material a is circularly applied at a position corresponding to the periphery of the cap member to form the resin film A.

11. The method for making an optical recording medium of any one of claims 1 to 10, wherein the curable resin material c is a photocurable resin material.

12. The method for making an optical recording medium of any one of claims 1 to 11, wherein the curable resin material c has a viscosity in the range of 30 mPa·s to 5000 mPa·s.

13. The method for making an optical recording medium of any one of claims 1 to 12, wherein the periphery of the cap member has a thickness that is equal to or less than five times the thickness of the resin layer.

14. The method for making an optical recording medium of any one of claims 1 to 13, wherein the resin film A is formed so as to extend from the periphery of the cap member to the recording medium along the periphery of the cap member, and the following relationships hold:

$$y \leq 5 \times x$$

$$z \leq 20 \times x$$

where x is the thickness of the periphery of the cap member, y is the distance from the periphery of the cap member to the peak of the resin film A, and z is the width of the resin film A extending from the periphery of the cap member on the recording medium.

15. The method for making an optical recording medium of any one of claims 1 to 14, wherein the angle defined by the outer circumference of the resin film A and the recording medium is 30° or less.

16. The method for making an optical recording medium of any one of claims 1 to 15, wherein if the cap member has a burr at the periphery thereof, the resin film A is formed so as to cover the burr.

17. The method for making an optical recording medium of any one of claims 1 to 16, wherein the cap member comprises a plastic.

18. The method for making an optical recording medium of claim 17, wherein the plastic is at least one material selected from the group consisting of polypropylene, polyethylene, polystyrene, nylons, polyethylene terephthalate (PET), polyvinyl chloride, polyvinyl alcohol, polyvinylidene chloride, ABS resins, polymethyl methacrylate (PMMA), epoxy resins, and cellulose triacetate resins.

19. The method for making an optical recording medium of any one of claims 1 to 18, wherein the cap member comprises polyvinyl chloride having a 100% modulus in the range of 3 MPa to 30 MPa.

20. The method for making an optical recording medium of any one of claims 1 to 19, wherein every bump/step (12) of 0.05 mm or more that are present on the recording medium are covered by the cap member and the resin film A.

21. The method for making an optical recording medium of any one of claims 1 to 20, wherein a bump that is present on the recording medium is covered with a resin film B that is physically separated from the resin film A covering the step formed by the cap member and the recording medium.

22. The method for making an optical recording medium of any one of claims 1 to 21, wherein the cap member is not detached from the recording medium when the recording medium is moved upward by sucking the cap member in a state in which the resin film A is formed.

23. The method for making an optical recording medium of any one of claims 1 to 22, wherein after the resin layer is formed, the resin layer on the recording medium is incised at a position outer than the periphery of the cap member to remove the cap member and the resin film A.

24. The method for making an optical recording medium of claim 23, wherein the resin layer is incised by light irradiation from the resin layer wherein the light irradiation condition is controlled such that the depth of the incision is between 0.5 times and 1.5 times the thickness of the resin layer.

25. The method for making an optical recording medium of any one of claims 1 to 24, wherein the curable resin material *c* other than the curable resin material *c* present in the vicinity of the periphery of the cap member is cured in order to remove the cap member and the resin film A.

26. The method for making an optical recording medium of any one of claims 1 to 25, wherein at least one additional resin layer is provided after the resin layer is provided.

27. An apparatus (900) for making an optical recording medium comprising:

   means (902) for placing a disk cap member on a recording medium comprising a circular substrate having a central hole so as to close the central hole, the outer diameter of the disk cap member being equal to or greater than that of the central hole;
means (905) for supplying a curable resin material *c* for forming a resin layer on the cap member;
means (906) for rotating the recording medium to spin-spread the curable resin material *c*; and
means (907) for curing the curable resin material *c*;
**characterized by** further comprising
means (903) for supplying a liquid resin material a that covers a step formed by the cap member and the recording medium; and
means (904) for curing the resin material a to form a resin film A.

## Patentansprüche

1. Verfahren zum Herstellen eines optischen Aufzeichnungsmediums (10, 10', 10"), umfassend: Anordnen eines Scheibenkappenelements (9, 105) auf einem Aufzeichnungsmedium (1, 1', 101), das ein kreisförmiges Substrat (3, 3', 103) mit einer Mittelöffnung (2, 102) umfasst, um so die Mittelöffnung zu schließen, wobei der äußere Durchmesser des Scheibenkappenelements gleich groß wie oder größer als der der Mittelöffnung ist, und Zuführen eines flüssigen Harzmaterials *a*, um so eine Stufe zwischen dem Scheibenkappenelement und dem Aufzeichnungsmedium zu bedecken;
Aushärten des Harzmaterials *a*, um einen Harzfilm A auszubilden;
Zuführen eines aushärtbaren Harzmaterials *c* zum Ausbilden einer Harzschicht an dem Kappenelement;
Drehen des Aufzeichnungsmediums, um das aushärtbare Harzmaterial *c* durch Drehung zu verbreiten; und
Aushärten des aushärtbaren Harzmaterials *c* während oder nach dem Verbreiten durch Drehung, um die Harzschicht auf dem Aufzeichnungsmedium auszubilden.

2. Verfahren zum Herstellen eines optischen Aufzeichnungsmediums nach Anspruch 1, bei dem die Harzschicht eine transparente Harzschicht (11, 106) ist.

3. Verfahren zum Herstellen eines optischen Aufzeichnungsmediums nach Anspruch 1 oder 2, bei dem der Durchmesser des Kappenelements größer als der Durchmesser der Mittelöffnung ist.

4. Verfahren zum Herstellen eines optischen Aufzeichnungsmediums nach einem der Ansprüche 1 bis 3, bei dem das Harzmaterial a ein lichthärtendes Harzmaterial ist.

5. Verfahren zum Herstellen eines optischen Aufzeichnungsmediums nach einem der Ansprüche 1 bis 4, bei dem das Harzmaterial a eine Viskosität in dem Bereich von 30 mPa·s bis 5000 mPa·s aufweist.

6. Verfahren zum Herstellen eines optischen Aufzeichnungsmediums nach einem der Ansprüche 1 bis 5, bei dem das Harzmaterial a kreisförmig auf eine Stelle an dem Aufzeichnungsmedium aufgebracht wird, wobei die Stelle dem Durchmesser des Kappenelements entspricht; das Kappenelement so angeordnet wird, dass es auf das Harzmaterial a gedrückt wird; und das Harzmaterial a ausgehärtet wird, um den Harzfilm A auszubilden.

7. Verfahren zum Herstellen eines optischen Aufzeichnungsmediums nach einem der Ansprüche 1 bis 5, bei dem das Kappenelement an das Aufzeichnungsmedium gehaftet wird, das Harzmaterial a kreisförmig auf eine Stelle aufgebracht wird, die dem äußeren Durchmesser des Kappenelements entspricht, und das Harzmaterial a ausgehärtet wird, um den Harzfilm A auszubilden.

8. Verfahren zum Herstellen eines optischen Aufzeichnungsmediums nach Anspruch 7, bei dem das Kappenelement mit einem aushärtbaren oder klebenden Haftmittel an das Aufzeichnungsmedium gehaftet wird.

9. Verfahren zum Herstellen eines optischen Aufzeichnungsmediums nach Anspruch 8, bei dem das aushärtbare Haftmittel ein lichthärtendes Harz mit einer Viskosität in dem Bereich von 30 mPa·s bis 5000 mPa·s ist.

10. Verfahren zum Herstellen eines optischen Aufzeichnungsmediums nach einem der Ansprüche 1 bis 5, bei dem das Harzmaterial a kreisförmig auf eine Stelle an dem Aufzeichnungsmedium aufgebracht wird, wobei die Stelle einer äußeren Seite des äußeren Durchmessers des Kappenelements entspricht, und das Harzmaterial a kreisförmig auf eine Stelle aufgebracht wird, die dem Umfang des Kappenelements entspricht, um den Harzfilm A auszubilden.

11. Verfahren zum Herstellen eines optischen Aufzeichnungsmediums nach einem der Ansprüche 1 bis 10, bei dem das aushärtbare Harzmaterial *c* ein lichthärtendes Harzmaterial ist.

12. Verfahren zum Herstellen eines optischen Aufzeichnungsmediums nach einem der Ansprüche 1 bis 11, bei dem das aushärtbare Harzmaterial *c* eine Viskosität in dem Bereich von 30 mPa·s bis 5000 mPa·s aufweist.

13. Verfahren zum Herstellen eines optischen Aufzeichnungsmediums nach einem der Ansprüche 1 bis 12, bei dem der Umfang des Kappenelements eine Dicke aufweist, die gleich groß wie oder geringer als das Fünffache der Dicke der Harzschicht ist.

14. Verfahren zum Herstellen eines optischen Aufzeichnungsmediums nach einem der Ansprüche 1 bis 13, bei dem der Harzfilm A so ausgebildet ist, dass er sich von dem Umfang des Kappenelements zu dem Aufzeichnungsmedium entlang des Umfangs des Kappenelements erstreckt, und die folgenden Beziehungen erfüllt sind:

$$y \leq 5 \times x$$

$$z \leq 20 \times x,$$

wobei x die Dicke des Umfangs des Kappenelements ist, y der Abstand von dem Umfang des Kappenelements zu dem Scheitelpunkt des Harzfilms A ist und z die Breite des Harzfilms A ist, der sich von dem Umfang des Kappenelements auf dem Aufzeichnungsmedium erstreckt.

15. Verfahren zum Herstellen eines optischen Aufzeichnungsmediums nach einem der Ansprüche 1 bis 14, bei dem der durch den äußeren Umfang des Harzfilms A und das Aufzeichnungsmedium definierte Winkel 30° oder weniger beträgt.

16. Verfahren zum Herstellen eines optischen Aufzeichnungsmediums nach einem der Ansprüche 1 bis 15, bei dem, wenn das Kappenelement an dessen Umfang einen Grat aufweist, der Harzfilm A so ausgebildet wird, dass er den Grat bedeckt.

17. Verfahren zum Herstellen eines optischen Aufzeichnungsmediums nach einem der Ansprüche 1 bis 16, bei dem das Kappenelement einen Kunststoff umfasst.

18. Verfahren zum Herstellen eines optischen Aufzeichnungsmediums nach Anspruch 17, bei dem der Kunststoff wenigstens ein Material ist, das aus der Gruppe bestehend aus Polypropylen, Polyethylen, Polystyren, Nylon, PolyethylenTerephthalat (PET), Polyvinylchlorid, Polyvinylalkohol, Polyvinylidenchlorid, ABS-Harzen, Polymethylmethacrylat (PMMA), Epoxidharzen und Zellulosetriazetatharzen ausgewählt ist.

19. Verfahren zum Herstellen eines optischen Aufzeichnungsmediums nach einem der Ansprüche 1 bis 18, bei dem das Kappenelement Polyvinylchlorid mit einem 100%-Modul in dem Bereich von 3 MPa bis 30 MPa umfasst.

20. Verfahren zum Herstellen eines optischen Aufzeichnungsmediums nach einem der Ansprüche 1 bis 19, bei dem jede Erhebung/Stufe (12) von 0,05 mm oder mehr, die auf dem Aufzeichnungsmedium vorhanden ist, durch das Kappenelement und den Harzfilm A bedeckt wird.

21. Verfahren zum Herstellen eines optischen Aufzeichnungsmediums nach einem der Ansprüche 1 bis 20, bei dem eine Erhebung, die auf dem Aufzeichnungsmedium vorhanden ist, mit einem Harzfilm B bedeckt wird, der von dem Harzfilm A räumlich getrennt ist, der die durch das Kappenelement und das Aufzeichnungsmedium gebildete Stufe bedeckt.

22. Verfahren zum Herstellen eines optischen Aufzeichnungsmediums nach einem der Ansprüche 1 bis 21, bei dem das Kappenelement nicht von dem Aufzeichnungsmedium gelöst wird, wenn das Aufzeichnungsmedium durch Ansaugen des Kappenelements in einem Zustand, in dem der Harzfilm A ausgebildet ist, nach oben bewegt wird.

23. Verfahren zum Herstellen eines optischen Aufzeichnungsmediums nach einem der Ansprüche 1 bis 22, bei dem, nachdem die Harzschicht ausgebildet wurde, die Harzschicht auf dem Aufzeichnungsmedium an einer Stelle eingeschnitten wird, die außerhalb des Umfangs des Kappenelements liegt, um das Kappenelement und den Harzfilm A zu entfernen.

24. Verfahren zum Herstellen eines optischen Aufzeichnungsmediums nach Anspruch 23, bei dem die Harzschicht durch Lichtbestrahlung von der Harzschicht eingeschnitten wird, wobei der Lichtbestrahlungszustand so gesteuert wird, dass die Tiefe des Einschnitts zwischen dem 0,5-fachen und dem 1,5-fachen der Dicke der Harzschicht liegt.

25. Verfahren zum Herstellen eines optischen Aufzeichnungsmediums nach einem der Ansprüche 1 bis 24, bei dem das aushärtbare Harzmaterial $c$ mit Ausnahme des aushärtbaren Harzmaterials $c$, das in der Nähe des Umfangs des Kappenelements vorhanden ist, ausgehärtet wird, um das Kappenelement und den Harzfilm A zu entfernen.

26. Verfahren zum Herstellen eines optischen Aufzeichnungsmediums nach einem der Ansprüche 1 bis 25, bei dem wenigstens eine zusätzliche Harzschicht vorgesehen wird, nachdem die Harzschicht vorgesehen wurde.

27. Vorrichtung (900) zum Herstellen eines optischen Aufzeichnungsmediums, umfassend:

Mittel (902) zum Anordnen eines Scheibenkappenelements auf einem Aufzeichnungsmedium, das ein kreisförmiges Substrat mit einer Mittelöffnung umfasst, um so die Mittelöffnung zu schließen, wobei der äußere Durchmesser des Scheibenkappenelements gleich groß wie oder größer als der der Mittelöffnung ist;
Mittel (905) zum Zuführen eines aushärtbaren Harzmaterials $c$ zum Ausbilden einer Harzschicht an dem Kappenelement;
Mittel (906) zum Drehen des Aufzeichnungsmediums, um das aushärtbare Harzmaterial $c$ durch Drehung zu verbreiten; und
Mittel (907) zum Aushärten des aushärtbaren Harzmaterials $c$;
**dadurch gekennzeichnet, dass** diese ferner umfasst:

Mittel (903) zum Zuführen eines flüssigen Harzmaterials $a$, das eine durch das Kappenelement und das Aufzeichnungsmedium gebildete Stufe bedeckt; und
Mittel (904) zum Aushärten des Harzmaterials $a$, um einen Harzfilm A auszubilden.

## Revendications

1. Procédé pour fabriquer un support d'enregistrement optique (10, 10', 10") comprenant le fait de :

placer un élément de coiffe de disque (9, 105) sur un support d'enregistrement (1, 1', 101) comprenant un substrat circulaire (3, 3', 103) ayant un trou central (2, 102) de sorte à fermer le trou central où le diamètre externe de l'élément de coiffe de disque est supérieur ou égal à celui du trou central et fournissant un matériau de résine liquide a de sorte à couvrir un palier entre l'élément de coiffe de disque et le support d'enregistrement ;
durcir le matériau de résine a pour former un film de résine A ;
fournir un matériau de résine durcissable c pour former une couche de résine sur l'élément de coiffe ;
mettre en rotation le support d'enregistrement pour un étalement centrifuge du matériau de résine durcissable c ; et
durcir le matériau de résine durcissable c pendant ou après l'étalement centrifuge pour former la couche de résine sur le support d'enregistrement.

2. Procédé pour fabriquer un support d'enregistrement optique de la revendication 1, dans lequel la couche de résine est une couche de résine transparente (11, 106).

3. Procédé pour fabriquer un support d'enregistrement optique de la revendication 1 ou 2, dans lequel le diamètre de l'élément de coiffe est supérieur au diamètre du trou central.

4. Procédé pour fabriquer un support d'enregistrement optique de l'une quelconque des revendications 1 à 3, dans lequel le matériau de résine a est un matériau de résine photodurcissable.

5. Procédé pour fabriquer un support d'enregistrement optique de l'une quelconque des revendications 1 à 4, dans lequel le matériau de résine a possède une viscosité dans la plage de 30 mPa·s à 5000 mPa·s.

**6.** Procédé pour fabriquer un support d'enregistrement optique de l'une quelconque des revendications 1 à 5, dans lequel le matériau de résine a est appliqué de manière circulaire au niveau d'une position sur le support d'enregistrement, la position correspondant au diamètre de l'élément de coiffe ; l'élément de coiffe est placé de sorte à être pressé sur le matériau de résine a ; le matériau de résine a est durci pour former le film de résine A.

**7.** Procédé pour fabriquer un support d'enregistrement optique de l'une quelconque des revendications 1 à 5, dans lequel l'élément de coiffe adhère au support d'enregistrement, le matériau de résine a est appliqué de manière circulaire au niveau d'une position correspondant au diamètre externe de l'élément de coiffe, et le matériau de résine a est durci pour former le film de résine A.

**8.** Procédé pour fabriquer un support d'enregistrement optique de la revendication 7, dans lequel l'élément de coiffe adhère au support d'enregistrement avec un adhésif durcissable ou collant.

**9.** Procédé pour fabriquer un support d'enregistrement optique de la revendication 8, dans lequel l'adhésif durcissable est une résine photodurcissable ayant une viscosité dans la plage de 30 mPa·s à 5000 mPa·s.

**10.** Procédé pour fabriquer un support d'enregistrement optique de l'une quelconque des revendications 1 à 5, dans lequel le matériau de résine a est appliqué de manière circulaire au niveau d'une position sur le support d'enregistrement, la position correspondant à un côté externe du diamètre externe de l'élément de coiffe, et le matériau de résine a est appliqué de manière circulaire au niveau d'une position correspondant à la périphérie de l'élément de coiffe pour former le film de résine A.

**11.** Procédé pour fabriquer un support d'enregistrement optique de l'une quelconque des revendications 1 à 10, dans lequel le matériau de résine durcissable c est un matériau de résine photodurcissable.

**12.** Procédé pour fabriquer un support d'enregistrement optique de l'une quelconque des revendications 1 à 11, dans lequel le matériau de résine durcissable c a une viscosité dans la plage de 30 mPa·s à 5000 mPa·s.

**13.** Procédé pour fabriquer un support d'enregistrement optique de l'une quelconque des revendications 1 à 12, dans lequel la périphérie de l'élément de coiffe a une épaisseur qui est inférieure ou égale à cinq fois l'épaisseur de la couche de résine.

**14.** Procédé pour fabriquer un support d'enregistrement optique de l'une quelconque des revendications 1 à 13, dans lequel le film de résine A est formé de sorte à s'étendre de la périphérie de l'élément de coiffe jusqu'au support d'enregistrement le long de la périphérie de l'élément de coiffe, et les relations suivantes maintiennent :

$$y \leq 5 \times x$$

$$z \leq 20 \times x$$

où x est l'épaisseur de la périphérie de l'élément de coiffe, y est la distance de la périphérie de l'élément de coiffe jusqu'au sommet du film de résine A, et z est la largeur du film de résine A s'étendant de la périphérie de l'élément de coiffe sur le support d'enregistrement.

**15.** Procédé pour fabriquer un support d'enregistrement optique de l'une quelconque des revendications 1 à 14, dans lequel l'angle défini par la circonférence externe du film de résine A et du support d'enregistrement est 30° ou moins.

**16.** Procédé pour fabriquer un support d'enregistrement optique de l'une quelconque des revendications 1 à 15, dans lequel, si l'élément de coiffe possède une bavure à sa périphérie, le film de résine A est formé de sorte à couvrir la bavure.

**17.** Procédé pour fabriquer un support d'enregistrement optique de l'une quelconque des revendications 1 à 16, dans lequel l'élément de coiffe comprend un plastique.

**18.** Procédé pour fabriquer un support d'enregistrement optique de la revendication 17, dans lequel le plastique est au moins un matériau sélectionné du groupe constitué de polypropylène, polyéthylène, polystyrène, nylons, polyéthylène téréphtalate (PET), polychlorure de vinyle, alcool polyvinylique, polychlorure de vinylidène, résine ABS, polyméthacrylate de méthyle (PMMA), résine époxy, et résines de triacétate de cellulose.

19. Procédé pour fabriquer un support d'enregistrement optique de l'une quelconque des revendications 1 à 18, dans lequel l'élément de coiffe comprend du polychlorure de vinyle ayant un module de 100% dans la plage de 3 MPa à 30 MPa.

20. Procédé pour fabriquer un support d'enregistrement optique de l'une quelconque des revendications 1 à 19, dans lequel chaque bosse/palier (12) de 0,05 mm ou plus qui sont présents sur le support d'enregistrement sont couverts par l'élément de coiffe et le film de résine A.

21. Procédé pour fabriquer un support d'enregistrement optique de l'une quelconque des revendications 1 à 20, dans lequel une bosse qui est présente sur le support d'enregistrement est couverte d'un film de résine B qui est physiquement séparé du film de résine A couvrant le palier formé par l'élément de coiffe et le support d'enregistrement.

22. Procédé pour fabriquer un support d'enregistrement optique de l'une quelconque des revendications 1 à 21, dans lequel l'élément de coiffe n'est pas détaché du support d'enregistrement lorsque le support d'enregistrement est déplacé vers le haut en aspirant l'élément de coiffe dans un état où le film de résine A est formé.

23. Procédé pour fabriquer un support d'enregistrement optique de l'une quelconque des revendications 1 à 22, dans lequel, après la formation de la couche de résine, la couche de résine sur le support d'enregistrement est incisée à une position externe à la périphérie de l'élément de coiffe pour retirer l'élément de coiffe et le film de résine A.

24. Procédé pour fabriquer un support d'enregistrement optique de la revendication 23, dans lequel la couche de résine est incisée par irradiation de lumière de la couche de résine où la condition d'irradiation de résine est commandée de sorte que la profondeur de l'incision soit entre 0,5 fois et 1,5 fois l'épaisseur de la couche de résine.

25. Procédé pour fabriquer un support d'enregistrement optique de l'une quelconque des revendications 1 à 24, dans lequel le matériau de résine durcissable c autre que le matériau de résine durcissable c présent à proximité de la périphérie de l'élément de coiffe est durci afin de retirer l'élément de coiffe et le film de résine A.

26. Procédé pour fabriquer un support d'enregistrement optique de l'une quelconque des revendications 1 à 25, dans lequel au moins une couche supplémentaire de résine est pourvue après que la couche de résine a été pourvue.

27. Appareil (900) pour fabriquer un support d'enregistrement optique comprenant :

un moyen (902) destiné à placer un élément de coiffe de disque sur un support d'enregistrement comprenant un substrat circulaire ayant un trou central de sorte à fermer le trou central, le diamètre externe de l'élément de coiffe de disque étant supérieur ou égal à celui du trou central ;
un moyen (905) destiné à alimenter un matériau de résine durcissable c pour former une couche de résine de l'élément de coiffe ;
un moyen (906) destiné à mettre en rotation le support d'enregistrement pour un étalement centrifuge du matériau de résine durcissable c ; et
un moyen (907) destiné à durcir le matériau de résine durcissable c ;
**caractérisé par** le fait de comprendre :

un moyen (903) destiné à fournir un matériau de résine liquide a qui couvre un palier formé par l'élément de coiffe et le support d'enregistrement ; et
un moyen (904) destiné à durcir le matériau de résine a pour former un film de résine A.

FIG. 1 (a)

FIG. 1 (b)

FIG. 2(a)

FIG. 2(b)

FIG. 2(c)

FIG. 3(a)

FIG. 3(b)

FIG. 4(a)

FIG. 4(b)

FIG. 4(c)

FIG. 5(a)

FIG. 5(b)

FIG. 5(c)

FIG. 6(a)

FIG. 6(b)

FIG. 6(c)

FIG. 6(d)

FIG. 7(a)

FIG. 7(b)

FIG. 7(c)

FIG. 7(d)

FIG. 8(a)

FIG. 8(b)

FIG. 8(c)

FIG. 8(d)

FIG. 9(a)

FIG. 9(b)

FIG. 9(c)

FIG. 10(a)

FIG. 10(b)

FIG. 10(c)

FIG. 11(a)

FIG. 11(b)

FIG. 11(c)

FIG. 12(a)

FIG. 12(b)

# FIG. 13

0. 2mm

2. 0mm   1. 0mm

13. 0mm

14mm

2. 0mm

12mm

φ 8mm

φ 22mm

FIG. 14(a)

FIG. 14(b)

FIG. 14(c)

# FIG. 15

105  C (106)   104

103

102

G    G    R

# FIG. 16

B     A    9

1″

S1       SO

## FIG. 17

900

| RECORDING MEDIUM SUPPLYING UNIT | 901 |

900a

| CAP-PLACING UNIT | 902 |

| RESIN MATERIAL SUPPLYING UNIT | 903 |

| RESIN MATERIAL CURING UNIT | 904 |

| CURABLE RESIN MATERIAL SUPPLYING UNIT | 905 |

| CURABLE RESIN MATERIAL SPIN-SPREADING UNIT | 906 |

| CURABLE RESIN MATERIAL CURING UNIT | 907 |

| RESIN FILM CUTTING UNIT | 908 |

| CAP-REMOVING UNIT | 909 |

| OPTICAL RECORDING MEDIUM RECOVERING UNIT | 910 |

**REFERENCES CITED IN THE DESCRIPTION**

**Patent documents cited in the description**

- JP 2005071571 A
- JP HEI10289489 B
- JP 10249264 A
- JP 2002237105 A
- JP 2005204430 A
- JP 2006191165 A

**Non-patent literature cited in the description**

- *Secchakuzai no Jissai Chishiki by Toshinao Okitsu,* 23 May 1996